(19) Europäisches Patentamt
European Patent Office
Office européen des brevets

(11) EP 2 703 432 A1

(12) EUROPEAN PATENT APPLICATION
published in accordance with Art. 153(4) EPC

(43) Date of publication:
05.03.2014 Bulletin 2014/10

(51) Int Cl.:
C08J 5/24 (2006.01)

(21) Application number: 12776016.3

(22) Date of filing: 23.02.2012

(86) International application number:
PCT/JP2012/054372

(87) International publication number:
WO 2012/147401 (01.11.2012 Gazette 2012/44)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR

(30) Priority: 27.04.2011 JP 2011099007

(71) Applicant: Toray Industries, Inc.
Tokyo, 103-8666 (JP)

(72) Inventors:
• MISUMI, Jun
Ehime 7913193 (JP)

• FUJIWARA, Takayuki
Ehime 7913193 (JP)
• MATSUDA, Ayumi
Ehime 7913193 (JP)
• TAIKO, Hiroshi
Shiga 5208558 (JP)

(74) Representative: Webster, Jeremy Mark et al
Mewburn Ellis LLP
33 Gutter Lane
London
EC2V 8AS (GB)

(54) PREPREG, FIBER-REINFORCED COMPOSITE MATERIAL, AND METHOD FOR PRODUCING PREPREG

(57) The present invention provides a prepreg comprising the following constituent elements (A), (B) and (C), the constituent element (A) being arranged on one surface or both surfaces of a layer containing the constituent elements (B) and (C), and not less than 90 area% of the constituent element (A) existing in the region from the surface of the prepreg to a position up to 20% of the average thickness of said prepreg:

(A) epoxy particles having a tan $\delta$ at 10°C of not less than 0.15 and having a three-dimensional cross-linked structure;
(B) a first epoxy resin composition; and
(C) reinforcing fibers.

The present invention provides a prepreg suitable for formation of a fiber reinforced composite material having an excellent stiffness, strength, and damping performance.

[Fig.1]

**Description**

TECHNICAL FIELD

The present invention relates to a fiber reinforced composite material which is suitable for sports applications and general industrial applications and which has an excellent stiffness, strength, and damping performance. The present invention also relates to a prepreg suitable for formation of the fiber reinforced composite material and a process for producing the prepreg.

BACKGROUND ART

A fiber reinforced composite material which contains carbon fibers or aramid fibers as reinforcing fibers is widely used as a structural material for, for example, aircraft and motor vehicles and in sports and general applications such as tennis rackets, golf club shafts, fishing rods, and bicycles, due to its high specific strength and high specific modulus. Most of recent golf club heads are made of metal and are enlarged. Such golf club heads have increased vibrations transmitted to the arms and a more solid feel during ball striking. Thus there is an increasing demand for improved damping performance and improved feel during ball striking.

Patent Document 1 discloses a golf club shaft made of a fiber reinforced resin, the shaft comprising a vibration dampening layer which extends along at least a portion of the length of the shaft and which is made of braided metal fibers. Patent Document 2 discloses a golf club shaft comprising not less than one polyester film disposed between fiber reinforced resin layers or on the interior surface of the innermost fiber reinforced resin layer.

There is also a demand for a response-conscious tennis racket with a light weight and improved maneuverability. A carbon fiber composite material which comprises an epoxy resin as the matrix is actively employed. Energy from an impact on the ball striking surface of a racket is converted into vibrations, which then transmitted to the player's body. It is known that repeated vibrations through the playing arm result in elbow fatigue and pain, which are commonly referred to as "tennis elbow". Thus it is preferred to reduce such vibrations.

Patent Document 3 discloses a tennis racket comprising a fiber reinforced composite material which uses, as the matrix resin, an epoxy resin composition containing a certain epoxy resin, rubber particles incompatible with the epoxy resin, and polyvinyl formal. In this technique, the rubber particles incompatible with the epoxy resin penetrate into the reinforcing fiber bundle, while the reinforcing fibers filter some of the rubber particulates, thereby providing the surface of the prepreg with a larger amount of the rubber component than the inside of the prepreg. Thus the interlayer between the laminated prepregs can contain a larger amount of the rubber component. This technique can provide a racket with higher damping performance and improved feel during striking a ball, compared with a technique of using rubber particulates soluble in the epoxy resin to provide a uniform amount of the rubber component. Penetration of the rubber particles with a lower modulus compared with the epoxy resin into the reinforcing fiber bundle, however, results in decrease in modulus of the matrix resin in the reinforcing fiber bundle, thereby reducing stiffness and strength of the racket.

On the other hand, Patent Documents 4 and 5 illustrate a prepreg which prevents penetration of particles into a reinforcing fiber bundle and which contains more particles in the surface of the prepreg. Such techniques employ core shell particles comprising an epoxy resin and a thermoplastic resin, or Nylon 12 particles.

In addition, Patent Document 6 illustrates a fishing rod with improved damping performance to provide indication of a light strike with high sensitivity. The patent describes an epoxy elastomer sheet disposed between fiber reinforced resin layers.

RELATED ART DOCUMENTS

Patent Documents

Patent Document 1: Japanese Unexamined Patent Application Publication No. 2009-261473
Patent Document 2: Japanese Unexamined Patent Application Publication No. 2008-237373
Patent Document 3: Japanese Unexamined Patent Application Publication No. 2003-012889
Patent Document 4: Japanese Unexamined Patent Application Publication No. 2010-116484
Patent Document 5: Japanese Unexamined Patent Application Publication No. S63-170428
Patent Document 6: Japanese Unexamined Patent Application Publication No. H04-207139

SUMMERY OF THE INVENTION

Problems to be Solved by the Invention

The techniques described above, however, have various problems. Although the technique described in Patent Document 1 improves damping performance, the technique uses metallic fibers having a higher specific gravity compared with carbon fibers commonly used for golf club shafts and thus provides a shaft having a higher mass.

Although the technique described in Patent Document 2 improves damping performance, the technique uses polyester having a lower modulus compared with an epoxy resin commonly used as the matrix resin of a fiber reinforced resin for golf club shafts and thus provides a shaft having a lower bending strength and a lower torsional strength.

The technique described in Patent Document 3 penetrates rubber particles having a lower modulus compared with an epoxy resin into a reinforcing fiber bundle, which results in decrease in modulus of the matrix resin in the reinforcing fiber bundle, as described above, and thus provides a racket having a lower stiffness and a lower strength.

Although the techniques described in Patent Documents 4 and 5 improve impact resistance and fatigue property of a fiber reinforced composite material, the techniques cannot provide sufficient damping performance at around room temperature.

Although the technique described in Patent Document 6 significantly improves damping performance due to the epoxy elastomer sheet, stiffness and strength of the fiber reinforced composite material is significantly reduced.

The present invention provides a fiber reinforced composite material which solves the problems of the prior arts and which has an excellent stiffness, strength, and damping performance. The present invention also provides a prepreg suitable for formation of such fiber reinforced composite material and a process for producing such prepreg.

Means for Solving the Problems

The prepreg of the present invention comprises constituent elements (A), (B) and (C) below,
the constituent element (A) being arranged on one surface or both surfaces of a layer containing the constituent elements (B) and (C),
not less than 90 area% of the constituent element (A) existing in the region from the surface of the prepreg to a position up to 20% of the average thickness of the prepreg;

(A) epoxy particles having a $\tan \delta$ at 10°C of not less than 0.15 and having a three-dimensional cross-linked structure;
(B) a first epoxy resin composition;
(C) reinforcing fibers.

The fiber reinforced composite material of the present invention comprises constituent elements (E), (F) and (G) below,
the fiber reinforced composite material has not less than 2 fiber reinforced layers containing the constituent elements (F) and (G),
not less than 90 area% of the constituent element (E) localizing in the interlayer region between a fiber reinforced layer and another fiber reinforced layer adjacent thereto when the cross section of the fiber reinforced composite material is observed, which interlayer region does not contain the constituent element (G);

(E) epoxy particles having a $\tan \delta$ at 10°C of not less than 0.15 and having a three-dimensional cross-linked structure;
(F) a third cured material of an epoxy resin composition;
(G) reinforcing fibers.

The process of producing the prepreg of the present invention comprises the steps of:

impregnating the constituent element (C) with the constituent element (B) to obtain a prepreg precursor; and
attaching the constituent element (A) to the prepreg precursor.

Further, the process of producing the prepreg of the' present invention comprises the steps (I), (II) and (III) below;

(I) dispersing the constituent element (A) in the constituent element (D) and making the resulting dispersion into a film;
(II) impregnating the constituent element (C) with the constituent element (B) to obtain a prepreg precursor;
(III) attaching the film obtained in (I) to the prepreg precursor obtained in (II).

Effects of the Invention

By the present invention, a fiber reinforced composite material having an excellent stiffness, strength and damping performance can be provided. Further, by the present invention, a prepreg suited for obtaining this fiber reinforced material and a process of producing the prepreg can be provided. That is, with the fiber reinforced composite material and the prepreg of the present invention, by localizing epoxy particles having a high vibration damping within the interlayer region in the fiber reinforced composite material, the vibration damping can be promoted without deteriorating the stiffness and strength of the fiber reinforced composite material. The present invention is useful for the purposes of improving the feeling of batting with a golf club, improving the impact-absorbing property of tennis rackets, improving the response to biting of fishing rods and so on.

BRIEF DESCRIPTION OF THE DRAWINGS

FIG. 1 is a cross-sectional view of a prepreg which comprises constituent elements (A), (B), and (C), the constituent element (A) being arranged on one surface of a layer containing the constituent elements (B) and (C).
FIG. 2 is a cross-sectional view of a prepreg which comprises constituent elements (A), (B), and (C), the constituent element (A) being arranged on both surfaces of a layer containing the constituent elements (B) and (C).
FIG. 3 is a cross-sectional view of a prepreg which comprises constituent elements (A), (B), (C), and (P), the constituent elements (A) and (P) being arranged on one surface of a layer containing the constituent elements (B) and (C).
FIG. 4 is a cross-sectional view of a prepreg which comprises constituent elements (A), (B), (C), and (P), the constituent elements (A) and (P) being arranged on both surfaces of a layer containing the constituent elements (B) and (C).
FIG. 5 is a cross-sectional view of a prepreg which comprises the constituent elements (A), (B), (C), and (D), the constituent element (A) being arranged in the constituent element (D) and on one surface of a layer containing the constituent elements (B) and (C).
FIG. 6 is a cross-sectional view of a prepreg which comprises the constituent elements (A), (B), (C), and (D), the constituent element (A) being arranged in the constituent element (D) and on both surfaces of a layer containing the constituent elements (B) and (C).
FIG. 7 is a cross-sectional view of a prepreg which comprises the constituent elements (A), (B), (C), (D), and (P), the constituent elements (A) and (P) being arranged in the constituent element (D) and on one surface of a layer containing the constituent elements (B) and (C).
FIG. 8 is a cross-sectional view of a prepreg which comprises the constituent elements (A), (B), (C), (D), and (P), the constituent elements (A) and (P) being arranged in the constituent element (D) and on both surface of a layer containing the constituent elements (B) and (C).
FIG. 9 is a cross-sectional view of a fiber reinforced composite material which comprises constituent elements (E), (F), and (G), the constituent element (E) existing in an interlayer between laminates containing the constituent elements (F) and (G).
FIG. 10 is a cross-sectional view of a fiber reinforced composite material which comprises the constituent elements (E), (F), (G), and (Q), the constituent elements (E) and (Q) existing in an interlayer between laminates containing the constituent elements (F) and (G).
FIG. 11 is a cross-sectional view of a fiber reinforced composite material which comprises the constituent elements (E), (F), (G), and (H), the constituent elements (E) and (H) existing in an interlayer between laminates containing the constituent elements (F) and (G), and the constituent element (E) being arranged in the constituent element (H).
FIG. 12 is a cross-sectional view of a fiber reinforced composite material which comprises the constituent elements (E), (F), (G), (H), and (Q), the constituent elements (E), (Q), and (H) existing in an interlayer between laminates containing the constituent elements (F) and (G), and the constituent elements (E) and (Q) being arranged in the constituent element (H).

MODE FOR CARRYING OUT THE INVENTION

[Prepreg]

Now, the present invention will be described in more detail. The prepreg of the present invention comprises the constituent elements (A), (B), and (C) as described below.

(A) Epoxy particles having a tan δ at 10°C of not less than 0.15 and a three-dimensional cross-linked structure
(B) First epoxy resin composition
(C) Reinforcing fibers

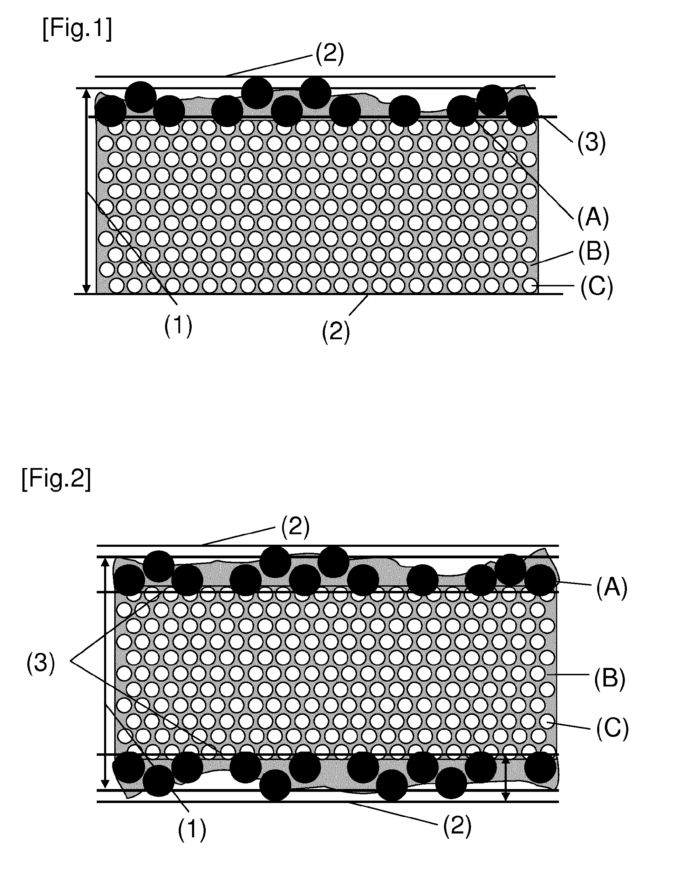

FIGS. 1-8 illustrate a cross-sectional view of a prepreg according to an example of a preferred embodiment of the present invention. As illustrated in FIGS. 1-8, the constituent element (C) is impregnated with the constituent element (B) to form a layer, and the constituent element (A) is arranged on one surface or both surfaces of the layer containing the constituent elements (B) and (C).

[Constituent Element (A)]

The constituent element (A) is required to be epoxy particles having a three-dimensional cross-linked structure. The three-dimensional cross-linked structure of the epoxy particles can provide a fiber reinforced composite material having an excellent stiffness, strength, and damping performance. If the epoxy particles do not have a three-dimensional cross-linked structure, the epoxy particles are more soluble in the first epoxy resin composition, which is the constituent element (B) and described below in more detail. In this case, a resulting fiber reinforced composite material has a low stiffness; strength, and glass-transition temperature, as well as poor expected damping performance. For the same reason, the constituent elements (A) and (B) are preferably incompatible.

The epoxy particles used in the present invention contain at least an epoxy resin and a hardener, which react with one another to produce the particles. Any epoxy resin may be used without limitation and can be selected from not less than one of, for example, glycidyl ether type epoxy resins, glycidyl amine type epoxy resins, glycidyl ester type epoxy resins, and epoxy resins obtained by oxidation of a compound having plural double bonds in the molecule. To provide a high tan δ at 10°C, it is preferred to use neopentyl glycol, polyethylene glycol, polypropylene glycol, hexanediol, trimethylolpropane, glycerin, diglycerin, polyglycerin, and glycidyl ether type epoxy resins obtained by reacting a polyol such as castor oil with epichlorohydrin.

An example of commercial products of the neopentyl glycol type epoxy resins includes "Denacol (registered trademark)" EX-211 from Nagase ChemteX Corp. Examples of commercial products of the polyethylene glycol type epoxy resins include "Denacol (registered trademark)" EX-821, "Denacol (registered trademark)" EX-830, "Denacol (registered trademark)" EX-841, and "Denacol (registered trademark)" EX-861 from Nagase ChemteX Corp. Examples of commercial products of the polypropylene glycol type epoxy resins include "Denacol (registered trademark)" EX-941 and "Denacol (registered trademark)" EX-931 from Nagase ChemteX Corp. An example of commercial products of the hexanediol type epoxy resins includes "Denacol (registered trademark)" EX-212 from Nagase ChemteX Corp. An example of commercial products of the trimethylol type epoxy resins includes "Denacol (registered trademark)" EX-321 from Nagase ChemteX Corp.

Any hardener may be used without limitation, including, for example, amine, acid anhydride, and phenol resin hardeners commonly used as the hardener of an epoxy resin, as well as mercaptan hardeners. Especially, an amine compound such as an aliphatic amine, an aromatic amine, and a polyamide amine are preferred. Examples of commercial products of such hardeners include dicyandiamide DICY from Mitsubishi Chemical Corp., aliphatic amine type "jERCURE (registered trademark)" from Mitsubishi Chemical Corp., polyoxyalkylenamine "Jeffamine (registered trademark)" from Huntsman Corp., and polyamide amine "Luckamide (registered trademark)" from DIC Corp. Especially, polyamide amines and aliphatic amines are preferred in terms of the reaction rate.a

A curing catalyst for the epoxy resin can also be used. Examples of such curing catalyst include urea compounds, tertiary amines and salts thereof, imidazoles and salts thereof, and Lewis acids and Bronsted acids and salts thereof. Especially, urea compounds are preferred in terms of a balance of storage stability and catalytic capacity.

Examples of the urea compounds which can be used include, for example, N,N-dimethyl-N'-(3,4-dichlorophenyl) urea, toluene bis(dimethylurea), 4,4'-methylene bis(phenyldimethylurea), and 3-phenyl-1,1-dimethylurea. Examples of commercial products of such urea compounds include DCMU 99 from Hodogaya Chemical Co., Ltd., and Omicure 24, Omicure 52, and Omicure 94 from Emerald Performance Materials, LLC.

The epoxy particles can contain a thermoplastic resin as its component, to the extent that the resin does not interfere with the effects of the present invention. Examples of such thermoplastic resin can include polyvinyl acetal resins such as polyvinyl formals and polyvinyl butyrals, polyvinyl alcohols, and phenoxy resins. Examples of a thermoplastic resin having an amide linkage include polyamides, polyimides, and polyvinylpyrrolidones. Examples of a thermoplastic resin having a sulphonyl group can include polyethersulfones.

Examples of commercial products of the thermoplastic resins include polyvinyl acetal resin Denka Butyral and "Denka Formal (registered trademark)" from Denki Kagaku Kogyo K.K., "Vinylec (registered trademark)" from Chisso Corp., phenoxy resin "UCAR (registered trademark)" PKHP from Union Carbide Corp., polyamide resin "Macromelt (registered trademark)" from Henkel-Hakusui Corp. and "Amilan (registered trademark)" CM4000 from Toray Industries, Inc., polyimide "Ultem (registered trademark)" from General Electric Co. and "Matrimid (registered trademark)" 5218 from Ciba-Geigy Chemical Corp., polyethersulfone "Sumikaexcel (registered trademark)" from Sumitomo Chemical Co. and "UDEL (registered trademark)" from Solvay Advanced Polymers K.K., and polyvinylpyrrolidone "Luviskol (registered trademark)" from BASF Japan Ltd.

Now, a process for producing the epoxy particles of the present invention from the above compound will be described, although it is not limited to thereto. Particles in the present invention are not limited to spherical particles and also include irregularly shaped particles. A first process comprises previously reacting the epoxy resin with the hardener to cure the resin, and then mechanically grinding the cured resin in, for example, a ball mill or a jet mill to produce particles. A second process comprises suspending the above-described mixture in an aqueous or non-aqueous liquid to produce particles. The second process is preferred in view of, for example, particle homogeneity and sphericity. Specific examples of the second process are as follows, although it is not limited thereto.

(1) A process wherein the above-described mixture or a solution thereof is sprayed to dry (spray drying);
(2) A process wherein the above-described mixture or a solution thereof is sprayed into a poor solvent to precipitate (spray precipitating);
(3) A process wherein the above-described mixture or a solution thereof is emulsified using a surfactant; and
(4) A process wherein the above-described mixture or a solution thereof is emulsified using an aqueous liquid containing a protective colloidal material

Representative examples of the surfactant used in the above process include, but not limited to, ether type nonionic surfactants such as polyoxyethylene phenol substituted ethers and polyoxyethylenepolyoxypropylene block polyethers; ester type nonionic surfactants such as higher fatty acid esters of polyethylene glycols and fatty esters of polyhydric alcohols; and nonionic surfactants such as alkyoxylated rosins. Examples of the protective colloidal material which is commonly used include polyvinyl alcohols, arabic gum, carboxymethyl cellulose, gelatin, and sodium alginate.

Common examples of the process of emulsifying and dispersing the mixture or solution in an aqueous liquid include a process of adding an aqueous medium in small portions to the mixture or solution with vigorous stirring and a process of adding the mixture or solution in small portions to an aqueous medium with vigorous stirring. Finally, the emulsion is heated at normal pressure or under pressure to react the epoxy resin in the particles with the hardener to cure the resin, and then filtered, centrifuged, and washed, for example, to give particles.

The incompatibility between the constituent element (A) and the constituent element (B) can be confirmed through a glass-transition temperature obtained from a storage modulus curve obtained by measuring the dynamic viscoelasticity of the cured resin composition containing the constituent elements (A) and (B). In particular, the glass-transition temperature of the cured resin composition containing the constituent elements (A) and (B), a molded plate containing the constituent element (A) only, and a cured resin obtained by curing the constituent element (B) only is measured using a dynamic viscoelasticity analyzer. If the constituent element (A) is incompatible with the constituent element (B), the cured resin. composition containing the constituent elements (A) and (B) exhibits a glass-transition temperature similar to the glass-transition temperature of the molded plate containing the constituent element (A) only and the glass-transition temperature of the cured resin obtained by curing the constituent element (B) only. As used herein, the term "similar" means that the temperature difference is between -3°C and 3°C.

The cured resin composition containing the constituent elements (A) and (B) is produced by the following process. The constituent elements (A) and (B) are kneaded, and then the resulting resin composition is defoamed in a vacuum. Then the resin composition is placed in a mold given a thickness of 2 mm by a 2 mm thick "Teflon (registered trademark)" spacer, and cured under conditions leading to complete cure of the constituent element (B) to provide a cured plate with no void. As used herein, the term "conditions leading to complete cure of the constituent element (B)" means that differential scanning calorimeter analysis at a temperature between room temperature and -350°C of the cured composition gives no residual exothermicity.

For measurement of the glass-transition temperature of the constituent element (A), a mixture of the epoxy resin constituting the constituent element (A), the hardener, and another additive is defoamed in a vacuum, and then cured in a mold given a thickness of 2 mm by a 2 mm thick "Teflon (registered trademark)" spacer under conditions leading to the complete cure to provide a molded plate with no void.

The cured resin containing the constituent element (B) only is produced by the following process. The constituent element (B) is defoamed in a vacuum, placed in a mold given a thickness of 2 mm by a 2 mm thick "Teflon (registered trademark)" spacer, and then cured under conditions leading to complete cure of the constituent element (B) to provide a cured plate with no void.

The constituent element (A) is required to have a tan $\delta$ at 10°C of not less than 0.15 and preferably not less than 0.2. If the tan $\delta$ is less than 0.15, the element has insufficient damping performance. The tan $\delta$ at 10°C can be determined by dynamic viscoelasticity analysis of a cured plate containing the constituent element (A) only which is produced as described above.

Not less than 90 area % of the constituent element (A) in the prepreg is required to exist in the region extending from the surface of the prepreg to 20% of the average thickness of the prepreg. In particular, taking the total area of the constituent element (A) in the prepreg which comprises the constituent elements (A), (B), and (C) as 100 area %, not less than 90 area % of the constituent element (A) is required to exist near the surface of the prepreg, i.e., the region extending from the surface of the prepreg to 20% of the average thickness of the prepreg. As illustrated in a cross-sectional view of a prepreg in FIGS. 1-8, distribution of the constituent element (A) near one surface or both surfaces of the prepreg with a higher concentration than the inner portion of the prepreg can provide a fiber reinforced composite material having an excellent stiffness, strength, and damping performance. If less than 90 area % of the constituent element (A) exists in the region extending from the surface of the prepreg to 20% of the average thickness of the prepreg, the epoxy particles penetrate into the reinforcing fiber bundle, thereby decreasing the stiffness, strength, and damping performance of the resulting fiber reinforced composite material.

The degree of localization of the particles in the prepreg can be evaluated by a method disclosed in Japanese Unexamined Patent Application Publication No. H01-104624. First, the prepreg is sandwiched and joined between two flat support plates and gently heated over a long period of time to cure the prepreg. It is important to gel the prepreg at as low temperature as possible. If the prepreg is heated before gelation, the resin in the prepreg flows, and the particles migrate, leading to an inaccurate evaluation of the particle distribution of the original prepreg. After gelation, the prepreg is gently heated for a long period of time to cure the prepreg. A photograph of a cross-section of the cured prepreg is taken at at least 200× magnification (see FIGS. 1-8). The photograph is used to determine the average thickness of the prepreg. The average thickness (1) of one prepreg layer is determined by measuring the thickness of at least 5 points randomly selected on the photograph and averaging the measurements. Next, lines (3) parallel to the surfaces (2) of the prepreg, the surfaces contacting with each of the support plates, are drawn a distance corresponding to 20% of the average thickness of the prepreg away from the surfaces (2). For the both surfaces of the prepreg, the cross sectional area of all of the particles of interest between each of the surfaces (2) in contact with each of the support plates and each of the 20% parallel lines (3) is summed to provide Sum 1. The term "particles of interest" refers to particles to be measured for the degree of localization. The particles across each of the parallel lines (3) are considered as the particles between each of the surfaces (2) and each of the parallel lines (3) for determination of the sum. The cross sectional area of all of the particles of interest disposed across the thickness of the prepreg is summed to provide Sum 2. The ratio of Sum 1 to Sum 2 (Sum 1/Sum 2) is calculated to determine a ratio of the particles of interest in the region extending from the surface of the prepreg to 20% of the average thickness of the prepreg, i.e., the degree of surface localization.

The cross sectional area of the particles may be measured using an image analyzer or determined by cutting out the entire particle parts from a certain region in the cross-sectional photograph and determining the mass of the parts. When the cross sectional area of the particles is being measured, some particles may have a cross section which does not pass through the center or may be observed to have a particle diameter smaller than the actual particle diameter, although such particles are ignored to quantify the cross sectional area. To reduce the effects of the variation in the cross sectional area on the degree of localization, the entire width of the resultant photograph is evaluated, and at least 5 points randomly selected on the photograph are evaluated to calculate the average. When it is difficult to distinguish the particles of interest from other particles and the matrix resin, the particles of interest are selectively stained, or the components other than the particles of interest are stained for observation. An optical microscope or a scanning electromicroscope may be used depending on the size of the particles and the staining method. In the present invention, a ratio of the particles localizing in the surface of the prepreg is measured according to area ratios. A mass ratio of particles equals to the area ratio, and thus measurement of the area ratio is substantially same as measurement of the mass ratio.

To ensure that not less than 90 area % of the constituent element (A) exists in the region extending from the surface of the prepreg to 20% of the average thickness of the prepreg, the constituent element (A) preferably has an average particle diameter of not less than 5 $\mu$m. As used herein, the term "average particle diameter" refers to a volume average particle diameter and can be measured using Nanotrac particle size analyzer from Nikkiso Co., Ltd. or measured in accordance with JISK 5600-9-3 (2006) using LMS-24 from Seishin Enterprise Co., Ltd. If the constituent element (A) has an average particle diameter of not less than 5 $\mu$m, the constituent element (A) is filtered by the reinforcing fiber bundle of the constituent element (C), and thus the constituent element (A) is more likely to exist near the surface. The constituent element (A) preferably has an average particle diameter of not more than 20 $\mu$m. If the constituent element (A) has an average particle diameter of more than 20 $\mu$m, a fiber reinforced composite material produced by laminating and curing the prepregs of the present invention has thicker interlayers, which then readily causes voids in the interlayers. In this case, increase of the epoxy resin composition to reduce the voids may lead to a fiber reinforced composite material which has a low content of reinforcing fibers and which tends to exhibit a reduced stiffness and a reduced strength.

In the present invention, the term "interlayer" refers to a layer in a fiber reinforced composite material produced by laminating and curing the prepregs, the layer situated between adjacent reinforcing fiber layers and not including the reinforcing fibers. The term "reinforcing fiber layer" refers to a layer of a resin composition containing the constituent elements (B) and (C).

The prepreg preferably contains the constituent element (A) in an amount of 2-20% by mass and more preferably 2-10% by mass. If the prepreg contains the constituent element (A) in an amount of less than 2% by mass, a resulting fiber reinforced composite material has an excellent stiffness and strength, but tends to have a low damping performance. On the other hand, if the prepreg contains the constituent element (A) in an amount of more than 2% by mass, a resulting fiber reinforced composite material has an excellent damping performance, but tends to have an extremely low stiffness and strength.

Preferably, the constituent element (A) is spherical. If the constituent element (A) is spherical, the thickness of an interlayer between reinforcing fiber layers in a fiber reinforced composite material produced from prepregs of the present invention can be readily controlled by varying the average particle diameter and the content of the constituent element (A), and thus the stiffness, strength, and damping performance of the fiber reinforced composite material is readily adjusted.

Preferably, the constituent element (A) of the present invention has a glass-transition temperature outside of the range of from higher than -10°C to lower than 100°C. If the glass-transition temperature is in the temperature range, a resulting fiber reinforced composite material may have a strength which varies depending on a use environment, when the material is used for, for example, a golf club shaft, a tennis racket, a fishing rod, and a ski.

[Constituent Element (B)]

The first epoxy resin composition of the constituent element (B) may be any epoxy resin composition. The composition contains an epoxy resin and a hardener, and can contain another ingredient such as a curing catalyst, where necessary.

Examples of the epoxy resin in the constituent element (B) include bisphenol type epoxy resins, amine type epoxy resins, phenol novolac type epoxy resins, cresol novolac type epoxy resins, resorcinol type epoxy resins, phenolic aralkyl type epoxy resins, dicyclopentadiene type epoxy resins, epoxy resins having a biphenyl backbone, urethane modified epoxy resins, and isocyanate modified epoxy resins. The epoxy rein can be not less than one selected from these resins.

As used herein, the term "bisphenol type epoxy resin" refers to a bisphenol compound in which two phenolic hydroxyl groups are glycidylated, and examples of such resins include bisphenol A type epoxy resins, bisphenol F type epoxy resins, bisphenol AD type epoxy resins, bisphenol S type epoxy resins, and halogen substituted versions, alkyl substituted versions, and hydrogenated versions thereof. Not only monomers, but also polymers having a plurality of repeating units can also be preferably used.

Examples of commercial products of the bisphenol A type epoxy resins include "jER (registered trademark)" 825, "jER (registered trademark)" 828, "jER (registered trademark)" 834, "jER (registered trademark)" 1001, "jER (registered trademark)" 1002, "jER (registered trademark)" 1003, "jER (registered trademark)" 1003F, "jER (registered trademark)" 1004, "jER (registered trademark)" 1004AF, "jER (registered trademark)" 1005F, "jER (registered trademark)" 1006FS, "jER (registered trademark)" 1007, "jER (registered trademark)" 1009, and "jER (registered trademark)" 1010 from Mitsubishi Chemical Corp. Examples of brominated bisphenol A type epoxy resins include "jER (registered trademark)" 505, "jER (registered trademark)" 5050, "jER (registered trademark)" 5051, "jER (registered trademark)" 5054, and "jER (registered trademark)" 5057 from Mitsubishi Chemical Corp. Examples of commercial products of hydrogenated bisphenol A type epoxy resins include ST5080, ST4000D, ST4100D, and ST5100 from Nippon Steel Chemical Co., Ltd.

Examples of commercial products of the bisphenol F type epoxy resins include "jER (registered trademark)" 806, "jER (registered trademark)" 807, "jER (registered trademark)" 4002P, "jER (registered trademark)" 4004P, "jER (registered trademark)" 4007P, "jER (registered trademark)" 4009P, and "jER (registered trademark)" 4010P from Mitsubishi Chemical Corp. and "Epotort (registered trademark)" YDF2001 and "Epotort (registered trademark)" YDF2004 from Nippon Steel Chemical Co., Ltd. An example of tetramethyl bisphenol F type epoxy resins includes YSLV-80XY from Nippon Steel Chemical Co., Ltd.

An example of the bisphenol S type epoxy resins includes "Epiclon (registered trademark)" EXA-154 from DIC Corp.

Especially, the bisphenol A type epoxy resins and the bisphenol F type epoxy resins are preferred due to their good balance of modulus, toughness, and heat resistance.

Examples of the amine type epoxy resins include, for example, tetraglycidyl diaminodiphenylmethane, triglycidyl aminophenol, triglycidyl aminocresol, tetraglycidyl xylylenediamine, and halogen substituted versions, alkynol substituted versions, and hydrogenated versions thereof.

Examples of the tetraglycidyl diaminodiphenylmethane include "Sumiepoxy (registered trademark)" ELM 434 from Sumitomo Chemical Co., YH434L from Nippon Steel Chemical Co., Ltd., "jER (registered trademark)" 604 from Mitsubishi Chemical Corp., and "Araldite (registered trademark)" MY720 and MY721 from Huntsman Advanced Materials. Examples of the triglycidyl aminophenol and the triglycidyl aminocresol include "Sumiepoxy (registered trademark)" ELM100 from Sumitomo Chemical Co., "Araldite (registered trademark)" MY0500, MY0510, and MY0600 from Huntsman Advanced Materials, and "jER (registered trademark)" 630 from Mitsubishi Chemical Corp. Examples of the tetraglycidyl xylylenediamine and hydrogenated versions thereof include TETRAD-X and TETRAD-C from Mitsubishi Gas Chemical Company, Inc.

Examples of commercial products of the phenol novolac type epoxy resins include "jER (registered trademark)" 152 and "jER (registered trademark)" 154 from Mitsubishi Chemical Corp., and "Epiclon (registered trademark)" N-740, N-770, and N-775 from DIC Corp.

Examples of commercial products of the cresol novolac type epoxy resins include "Epiclon (registered trademark)" N-660, N-665, N-670, N-673, and N-695 from DIC Corp., and EOCN-1020, EOCN-102S, and EOCN-104S from Nippon Kayaku Co., Ltd.

A specific example of the resorcinol type epoxy resins includes "Denacol (registered trademark)" EX-201 from Nagase ChemteX Corp.

Examples of commercial products of the dicyclopentadiene type epoxy resins include "Epiclon (registered trademark)" HP7200, HP7200L, HP7200H, and HP7200HH from DIC Corp., "Tactix (registered trademark)" 558 from Huntsman Advanced Materials, and XD-1000-1 L and XD-1000-2L from Nippon Kayaku Co., Ltd.

Examples of commercial products of the epoxy resins having a biphenyl backbone include "jER (registered trademark)" YX4000H, YX4000, and YL6616 from Mitsubishi Chemical Corp., and NC-3000 from Nippon Kayaku Co., Ltd.

Examples of commercial products of the urethane and the isocyanate modified epoxy resins include AER 4152 from Asahi Kasei Epoxy Co., Ltd. and ACR1348 from ADEKA Corp., which contain an oxazolidone ring.

It is preferred to use an epoxy resin having an epoxy equivalent of 800-5500, because such resin improves adhesion with epoxy particles and provides an excellent damping performance. An epoxy resin having an epoxy equivalent of 800-2500 is more preferred. If the epoxy equivalent is less than 800, sufficient improvement in adhesion may not be provided. If the epoxy equivalent is more than 5500, a resulting epoxy resin composition may have high viscosity, and thus it may be difficult to produce a prepreg. It is more preferred to use a bisphenol type epoxy resin having an epoxy equivalent of 800-5500 due to its goof balance of damping performance and toughness. A bisphenol A type epoxy resin and a bisphenol F type epoxy resin having an epoxy equivalent of 800-5500 are still more preferred.

Although any hardener may be used for the constituent element (B) without limitation, it is preferred to use a dicyandiamide or a derivative thereof, or a diaminodiphenyl sulfone due to good storage stability. Amines such as aromatic amines and alicyclic amines, acid anhydrides, polyamino amides, organic acid hydrazides, and isocyanates may also be used.

Examples of commercial products of the dicyandiamide include DICY-7 and DICY-15 from Mitsubishi Chemical Corp.

Preferably, the hardener is contained in an amount such that the total epoxy resin component has an active hydrogen equivalent of 0.6-1.2 based on epoxy equivalent. More preferably, the hardener is contained in an amount such that the epoxy resin component has an active hydrogen equivalent of 0.7-1.0. As used herein, the term "active hydrogen group" means a functional group which can react with an epoxy group in the hardener. If the active hydrogen equivalent is less than 0.6, the rate of reaction, heat resistance and modulus of elasticity of the cured material may be decreased, and the fiber reinforced composite material may have a low glass-transition temperature and a low strength. If the active hydrogen equivalent is more than 1.2, the fiber reinforced composite material may have a reduced impact resistance due to a reduced plastic deformation capacity, although the cured material has a sufficient rate of reaction, a sufficient glass-transition temperature, and a sufficient modulus.

A curing catalyst can also be used for the constituent element (B). Examples of the curing catalyst include urea compounds, tertiary amines and salts thereof, imidazoles and salts thereof, and Lewis acids and Bronsted acids and salts thereof. Especially, the urea compounds are preferred in terms of a balance of storage stability and catalytic capacity.

Examples of the urea compounds which can be used include N,N-dimethyl-N'-(3,4-dichlorophenyl)urea, toluene bis(dimethylurea), 4,4'-methylene bis(phenyldimethylurea), and 3-phenyl-1,1-dimethylurea. Examples of commercial products of the urea compounds include DCMU 99 from Hodogaya Chemical Co., Ltd., and Omicure 24, Omicure 52, and Omicure 94 from Emerald Performance Materials, LLC.

Preferably, the urea compound is contained in an amount of 1-4 parts by mass based on 100 parts by mass of the total epoxy resin component, and more preferably 1.5-3 parts by mass. If the urea compound is contained in an amount of less than 1 part by mass, the reaction may not progress sufficiently, and the cured material may have a reduced modulus and a reduced heat resistance. If the urea compound is contained in an amount of more than 4 parts by mass, self-polymerization reaction of the epoxy resin inhibits reaction of the epoxy resin with the hardener, which may result in the cured material having a reduced toughness and a reduced modulus.

Preferably, the cured constituent element (B) has a glass-transition temperature of 100°C or higher. If the cured material has a glass-transition temperature of lower than 100°C, the fiber reinforced composite material may exhibit warpage and strain during molding and may be deformed during use in a high temperature environment. The constituent element (B) can be cured by heating, for example, at 130°C for 90 minutes.

The constituent element (B) can contain a thermoplastic resin other than the constituent element (A), inorganic particles, an inorganic filler, and the like, to the extent that they do not interfere with the effects of the present invention. Examples of the thermoplastic resin include thermoplastic resins which are soluble in the epoxy resin and organic particles such as rubber particles and thermoplastic resin particles. Preferred examples of the thermoplastic resins which are soluble in the epoxy resin includes thermoplastic resins which have a hydrogen-bonding functional group and is expected to improve adhesion of the resin with the reinforcing fibers. Examples of the thermoplastic resins which are soluble in the epoxy resin and have a hydrogen-bonding functional group include thermoplastic resins having an alcoholic hydroxyl group, thermoplastic resins having an amide linkage, and thermoplastic resins having a sulphonyl group.

Examples of the thermoplastic resins having an alcoholic hydroxyl group include polyvinyl acetal resins such as polyvinyl formal and polyvinyl butyral, polyvinyl alcohols, and phenoxy resins. Examples of the thermoplastic resins having an amide linkage include polyamides, polyimides, and polyvinylpyrrolidones. Examples of the thermoplastic resins having a sulphonyl group include polysulfones. The polyamides, polyimides, and polysulfones may have, for example, an ether linkage and a functional group such as a carbonyl group in the backbone. The polyamides may have a substituent at the nitrogen atom of the amide groups.

Examples of commercial products of the thermoplastic resins which are soluble in the epoxy resin and have a hydrogen-bonding functional group can include polyvinyl acetal resin Denkabutyral and "Denka Formal (registered trademark)" from Denki Kagaku Kogyo K.K. and "Vinylec (registered trademark)" from Chisso Corp.; phenoxy resin "UCAR (registered trademark)" PKHP from Union Carbide Corp.; polyamide resin "Macromelt (registered trademark)" from Henkel-Hakusui Corp. and "Amilan (registered trademark)" CM4000 from Toray Industries, Inc.; polyimide "Ultem (registered trademark)" from General Electric Co. and "Matrimid (registered trademark)" 5218 from Ciba-Geigy Chemical Corp.; polysulfone "Sumikaexcel (registered trademark)" from Sumitomo Chemical Co. and "UDEL (registered trademark)" from Solvay Advanced Polymers K.K.; and polyvinylpyrrolidone "Luviskol (registered trademark)" from BASF Japan Ltd.

It is also preferred to use acrylic resins for viscoelasticity control, because they have a high compatibility with epoxy resins. Examples of commercial products of the acrylic resins can include "Dianal (registered trademark)" BR series from Mitsubishi Rayon Co., Ltd., "Matsumoto Microsphere (registered trademark)" M, M100, and M500 from Matsumoto Yushi-Seiyaku Co., Ltd., and "Nanostrength (registered trademark)" E40F, M22N, and M52N from Arkema Inc.

Rubber particles can also be added. It is preferred to use cross-linked rubber particles and core shell rubber particles formed by graft-polymerizing a different polymer to the surface of the cross-linked rubber particles, in view of, for example, handleability.

Examples of commercial products of the cross-linked rubber particles which can be used include cross-linked carboxyl modified butadiene-acrylonitrile copolymer FX 501P from JSR Corp., acrylic rubber particulate CX-MN series from Nippon Shokubai Co., Ltd., and YR-500 series from Nippon Steel Chemical Co., Ltd.

Examples of commercial products of the core shell rubber particles which can be used include butadiene-alkyl methacrylate-styrene terpolymer "Paraloid (registered trademark)" EXL-2655 from Kureha Corp., acrylic ester-methacrylic acid ester copolymer "Stafiloid (registered trademark)" AC-3355 and TR-2122 from Takeda Pharmaceutical Co., Ltd., butyl acrylate-methyl methacrylate copolymer "PARALOID (registered trademark)" EXL-2611 and EXL-3387 from Rohm & Haas Co., and "Kane Ace (registered trademark)" MX series from Kaneka Corp.

Preferred examples of the thermoplastic resin particles include polyamide particles and polyimide particles. Examples of commercial products of the polyamide particles which can be used include SP-500 from Toray Industries, Inc. and "Orgasol (registered trademark)" from Arkema Inc.

Examples of the inorganic particles and the inorganic filler which can be used include carbon blacks, clays, carbon nanotubes, fullerenes, graphenes, hollow carbon fibers, and metal particulates.

[Constituent Element (C)]

Reinforcing fibers are used as the constituent element (C). Any reinforcing fibers may be used without limitation, including, for example, glass fibers, carbon fibers, aramid fibers, boron fibers, alumina fibers, and silicon carbide fibers. Two or more of these fibers may be combined. The carbon fibers are preferred, because such fibers can provide a fiber reinforced composite material having a light weight and a high stiffness.

It is more preferred to use carbon fibers having a tensile modulus of 230-450 GPa, because such fibers can provide a fiber reinforced composite material having not only a lighter weight and a higher stiffness, but also an excellent damping performance. If the tensile modulus is less than 230 GPa, a resulting fiber reinforced composite material tends to have a lower stiffness and a lower damping performance. If the tensile modulus is more than 450 GPa, adhesion between the carbon fibers and the epoxy resin tends to be reduced, and thus a resulting fiber reinforced composite material may have a reduced strength, although the resulting material may have improved damping performance due to conversion of the heat generated by the friction between the carbon fibers and the epoxy resin to energy. In terms of the balance of the mechanical properties and the damping performance of the resulting fiber reinforced composite material, it is more preferred to use carbon fibers having a tensile modulus of 230-300 GPa.

The reinforcing fibers may be in any form, including, for example, unidirectionally oriented long fibers, tows, woven fabrics, mats, knits, braid, and short fibers having a chopped length of less than 10 mm. As used herein, the term "long fiber" refers to a single fiber or a fiber bundle substantially having a continuous length of not less than 10 mm. The "term short fiber" refers to a fiber bundle having a cut length of less than 10 mm. Especially, for applications where a high specific strength and a high specific modulus are required, a unidirectionally oriented reinforcing fiber bundle is most suitable. A form of cloth (woven fabric) is also suitable for the present invention due to its handleability.

[Constituent Element (P)]

Preferably, the prepreg of the present invention comprises a constituent element (P), which are particles having a Young's modulus of not less than 2 GPa and an average particle diameter of 5-100 $\mu$m. Addition of particles having a Young's modulus of not less than 2 GPa can interfere with decrease in stiffness of the interlayers due to the constituent element (A), thereby interfering with decrease in modulus and strength of the fiber reinforced composite material. More preferably, the particles have a Young's modulus of not less than 3 GPa. If the Young's modulus is less than 2 GPa, the matrix resin in the fiber reinforced composite material has a lower Young's modulus, which may result in decrease in stiffness of the interlayers.

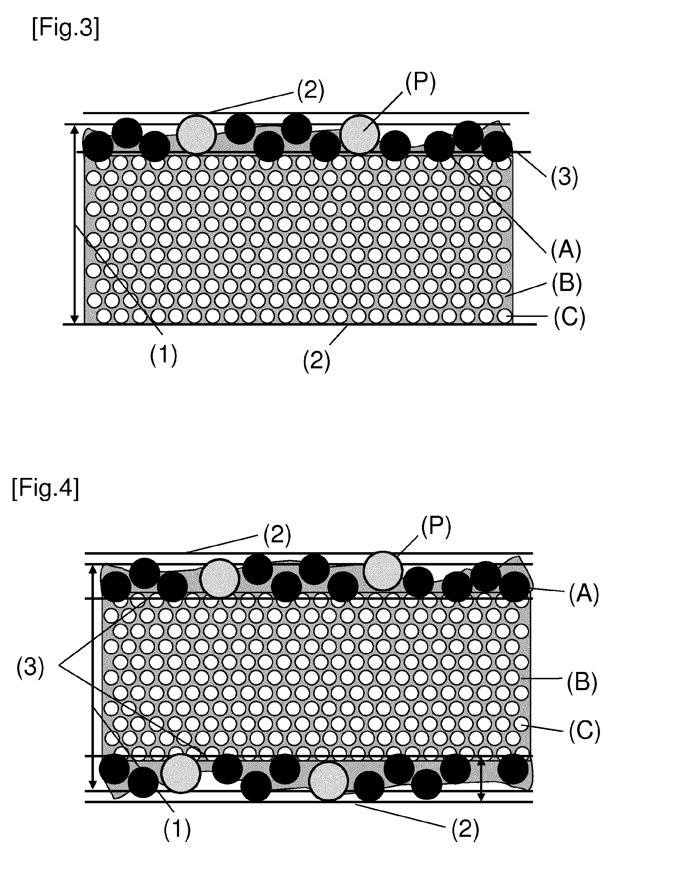

Preferably, not less than 90 area % of the constituent element (P) in the prepreg exists in the region extending from the surface of the prepreg to 20% of the average thickness of the prepreg. In particular, taking the total area of the constituent element (P) in the prepreg which comprises the constituent elements (A), (B), (C), and (P) as 100 area %, not less than 90 area % of the constituent element (P) preferably exists near the surface of the prepreg, i.e., the region extending from the surface of the prepreg to 20% of the average thickness of the prepreg. As illustrated a cross-sectional view of a prepreg in FIGS. 3, 4, 7, and 8, distribution of the constituent element (P) near one surface or both surfaces of the prepreg with a higher concentration than the inner portion of the prepreg can effectively interfere with decrease in stiffness of the interlayers. If less than 90 area % of the constituent element (P) exists in the region extending from the surface of the prepreg to 20% of the average thickness of the prepreg, the particles of the constituent element (P) penetrate into the reinforcing fiber bundle, which may result in decrease in stiffness, strength, and damping performance of the resulting fiber reinforced composite material.

The degree of localization of the particles of the constituent element (P) in the prepreg can be evaluated by a method disclosed in Japanese Unexamined Patent Application Publication No. H01-104624, in a manner similar to the manner for the constituent element (A). To ensure that not less than 90 area % of the constituent element (P) exists in the region extending from the surface of the prepreg to 20% of the average thickness of the prepreg, the constituent element (P) preferably has an average particle diameter of not less than 5 $\mu$m. As used herein, the term "average particle diameter" refers to a volume average particle diameter and can be measured using Nanotrac particle size analyzer from Nikkiso Co., Ltd. or measured in accordance with JISK 5600-9-3 (2006) using LMS-24 from Seishin Enterprise Co., Ltd. If the constituent element (P) has an average particle diameter of not less than 5 $\mu$m, the constituent element (P) is filtered by the reinforcing fiber bundle of the constituent element (C), and thus the constituent element (P) is more likely to exist near the surface. The constituent element (P) preferably has an average particle diameter of not more than 100 $\mu$m. If the constituent element (P) has an average particle diameter of more than 100 $\mu$m, a fiber reinforced composite material produced by laminating and curing the prepregs of the present invention has thicker interlayers, which then readily cause voids in the interlayers. In this case, increase of the epoxy resin composition to reduce the voids may lead to a fiber reinforced composite material which has a low content of reinforcing fibers and which tends to exhibit a reduced stiffness and a reduced strength.

Examples of the constituent element (P) include carbon particles, silica particles, metal particles, thermoplastic resin particles, inorganic materials, and particles of inorganic materials with the core plated with a conductive material.

Examples of the carbon particles include, for example, "Bellpearl (registered trademark)" C-600, C-800, and C-2000 from Air Water Inc., "NICABEADS (registered trademark)" ICB, PC, and MC from Nippon Carbon Co., Ltd., Glassy Carbon from Tokai Carbon Co., Ltd., High Purity Artificial Graphite SG series, SGB series, and SN series from SEC Carbon, Ltd., and spherical carbon from Gunei Chemical Industry Co., Ltd.

When metal particles are used, it is preferred to use platinum, gold, silver, copper, tin, nickel, or titanium particles due to their high stability, although any metal particles may be used. These metals may be used individually, or an alloy based on these metals may be used. An example of the metal particles includes, for example, "Bright (registered trademark)" GNM-Ni from Nippon Chemical Industrial Co., Ltd.

The conductive material used for the conductive particles of inorganic or organic materials with the core plated with a conductive material may any material, as long as it is an electrically good conductor. For example, metals such as platinum, gold, silver, copper, nickel, titanium, cobalt, palladium, tin, zinc, iron, chromium, and aluminum, conductive polymers such as polyacetylenes, polyanilines, polypyrroles, polythiophenes, polyisothianaphthenes, and polyethylenedioxythiophenes, and carbons such as carbon blacks including channel blacks, thermal blacks, furnace blacks, and ketjen blacks, carbon nanotubes, fullerenes, graphenes, and hollow carbon fibers can be used.

It is especially preferred to use particles of a thermoplastic resin as the organic material with the core plated with a conductive material described above, because the resulting fiber reinforced composite material can exhibit a good impact resistance.

Examples of such particles include metal plated divinylbenzene polymer particle "Micropearl (registered trademark)" AU 215, AU 225, CU 215, and NI 215 from Sekisui Chemical Co., Ltd.

Examples of the thermoplastic resin particles include, for example, polyamide particles, polyamide imide particles, polyethersulfone particles, polyetherimide particles, polyacetylene particles, polyaniline particles, polypyrrole particles, polythiophene particles, polyisothianaphthen particles, and polyethylenedioxythiophene particles.

Although the particles of the component [P] may be in any of a spherical, nonspherical, porous, acicular, whisker, and flaky forms, the particles preferably is in a spherical form. The spherical particles prevent degradation of flow properties of the thermosetting resin and thus exhibit good carbon fiber impregnating property. The spherical particles reduces a delamination occurring from drop impact (or local impact) on a carbon fiber reinforced composite material, thereby improving impact resistance of the fiber reinforced composite material. When a stress is applied to a carbon fiber reinforced composite material after the impact, failure due to the stress concentrations initiates from the delamination.

[Constituent Element (D)]

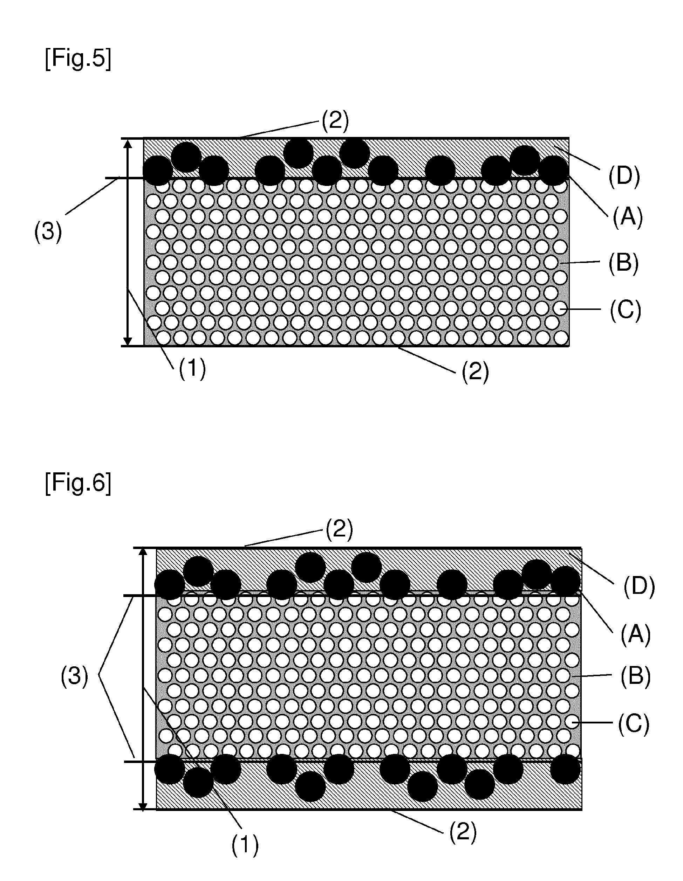

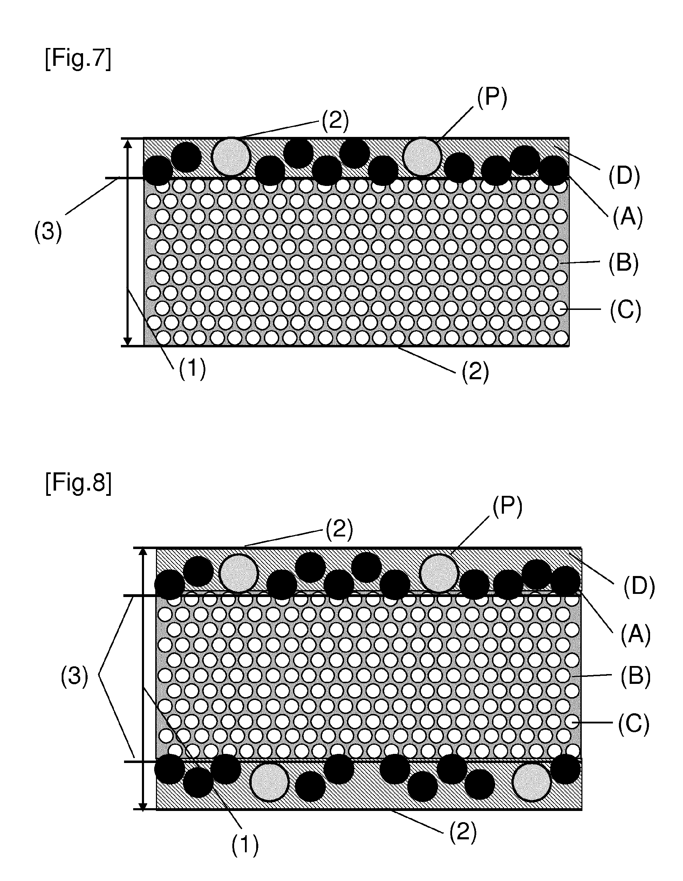

Preferably, the prepreg of the present invention further comprises the constituent element (D), which is arranged on one surface or both surfaces of a layer containing the constituent elements (B) and (C), and the constituent element (A) exists in the constituent element (D), as illustrated in FIGS. 5 and 6. In a case in which the prepreg of the present invention also comprises the constituent element (P), the constituent elements (A) and (P) preferably exist in the constituent element (D), as illustrated in FIGS. 7 and 8. The constituent element (D) is a second epoxy resin composition, which is incompatible with the constituent element (A). Inclusion of the constituent elements (A) and (P) in the constituent element (D) can reduce voids caused when the prepregs are laminated and cured to produce a fiber reinforced composite material The constituent element (D) may be any epoxy resin composition. The composition contains an epoxy resin and a hardener, and can contain another ingredient such as a curing catalyst, where necessary. The epoxy resins, the hardeners, and the other ingredients such as curing catalysts listed for the constituent element (B) can be used for the constituent element (D). Although the constituent element (D) (second epoxy resin composition) may be different from or the same as the constituent element (B) (first epoxy resin composition), the constituent element (D) is preferably the same as the constituent element (B). As used herein, the term "same" means that the constituent element (D) contains the same type of epoxy resin, hardener, and curing catalyst as the constituent element (B) and that the content of each of the components in the constituent element (D) differs from the content of each of the components in the constituent element (B) by 5% by mass or less.

Preferably, the cured constituent element (D) has a glass-transition temperature of 100°C or higher. If the cured element has a glass-transition temperature of lower than 100°C, the fiber reinforced composite material may exhibit warpage and strain during molding and may be deformed during use in a high temperature environment. The constituent element (D) can be cured by heating, for example, at 130°C for 90 minutes.

[Process for Producing Prepreg]

Preferably, the prepreg of the present invention can be produced by the following process (1) or (2), although not limited thereto.

(1) A process for producing the prepreg, the process comprising the steps of impregnating the constituent element (C) with the constituent element (B) to obtain a prepreg precursor, and attaching the constituent element (A) to the prepreg precursor

(2) A process for producing the prepreg, the process comprising the following steps (I), (II), and (III):

(I) Step of dispersing the constituent element (A) in the constituent element (D) and making the resulting dispersion into a film

(II) Step of impregnating the constituent element (C) with the constituent element (B) to obtain a prepreg precursor

(III) Step of attaching the film obtained in (I) to the prepreg precursor obtained in (II)

In a case in which the prepreg comprises the constituent element (P), the prepreg can be produced by the following process (3) or (4):

(3) A process for producing the prepreg, the process comprising the steps of impregnating the constituent element (C) with the constituent element (B) to obtain a prepreg precursor and attaching the constituent element (A) to the prepreg precursor

(4) A process for producing the prepreg, the process comprising the following steps (I'), (II') and (III'):

(I') Step of dispersing the constituent elements (A) and (P) in the constituent element (D) and making the resulting dispersion into a film

(II') Step of impregnating the constituent element (C) with the constituent element (B) to obtain a prepreg precursor

(III') Step of attaching the film obtained in (I') to the prepreg precursor obtained in (II')

Examples of a process for impregnating the constituent element (C) with the constituent element (B) can include a wet process of dissolving the epoxy resin composition in a solvent such as methyl ethyl ketone and methanol to reduce the viscosity and impregnating the solution, and a hot-melt process (dry process) of heating the composition to reduce the viscosity and impregnating the composition.

In the wet process, the reinforcing fibers are immersed in a solution of the epoxy resin composition and then removed from the solution, and the solvent is evaporated using, for example, an oven. In the hot-melt process, a fiber substrate comprising the reinforcing fibers is directly impregnated with the epoxy resin composition heated to reduce the viscosity. Alternatively, the epoxy resin composition is coated onto, for example, a release paper to form a coated film, and then the film is coated onto one surface or both surfaces of a fiber substrate comprising the reinforcing fibers, and heated and pressurized to impregnate the fiber substrate comprising the reinforcing fibers with the resin. The hot-melt process is preferred, because such process can substantially remove all of the solvent in the prepreg.

Preferably, the prepreg precursor obtained by impregnating the constituent element (C) with the constituent element (B) has an amount of the reinforcing fibers per unit area of 50-300 g/m$^2$. Preferably, the upper limit of the amount of the reinforcing fibers is not more than 200 g/m$^2$. If the amount of the reinforcing fibers is less than 50 g/m$^2$, it is required to increase the number of laminations to obtain a fiber reinforced composite material having a specified thickness, which results in a complicated process. On the other hand, if the amount of the reinforcing fibers is more than 300 g/m$^2$, the prepreg tends to have degraded draping properties.

Preferably, the prepreg precursor contains the reinforcing fibers in an amount of 60-90% by mass, more preferably 65-85% by mass, and still more preferably 70-80% by mass. If the amount of reinforcing fibers is less than 60% by mass, the resin is contained in an extremely high amount, which may result in failure to capitalize on benefits of the fiber reinforced composite material having an excellent specific strength and specific modulus, or production of an extremely high exotherm during curing to produce a fiber reinforced composite material. If the amount of the reinforcing fibers is more than 90% by mass, defective impregnation with the resin occurs, which may result in the fiber reinforced composite material with many voids.

Examples of a process for attaching the constituent elements (A) and (P) to the prepreg precursor include a process of applying the constituent elements (A) and (P) onto the prepreg precursor using an applicator, a process of applying the constituent elements (A) and (P) onto the prepreg precursor and then passing the resultant through a nip having a specified spacing, a process of applying the constituent elements (A) and (P) onto a release paper or release film using an applicator and pressure-bonding the resultant paper or film to the prepreg precursor for integration, a process of dispersing the constituent elements (A) and (P) in a liquid which cannot dissolve the constituent elements (A) and (P), applying the dispersion onto the prepreg precursor, and drying the dispersion to remove the liquid, and a process of attaching the constituent elements (A) and (P) to the prepreg precursor by static charge.

A preferred example of a process for dispersing the constituent elements (A) and (P) in the constituent element (D) includes a process of kneading the constituent elements (A), (P), and (D) using, for example, a kneader, a three roll mill, a bead mill, a planetary mixer, or a twin screw extruder.

An example of a process for making the resin composition produced by dispersing the constituent elements (A) and (P) in the constituent element (D) into a film includes a process of coating the resin composition onto, for example, a release paper to form a film.

[Fiber Reinforced Composite Material]

The fiber reinforced composite material of the present invention comprises the following constituent elements (E), (F), and (G) and has not less than 2 fiber reinforced layers containing the constituent elements (F) and (G). Not less than 90 area% of the constituent element (E) localizes in the interlayer region between a fiber reinforced layer and another fiber reinforced layer adjacent thereto, when the cross section of the fiber reinforced composite material is observed.

The constituent element (E) is epoxy particles having a tan δ at 10°C of not less than 0.15 and having a three-dimensional cross-linked structure.

The constituent element (F) is a cured material of a third epoxy resin composition.

The constituent element (G) is reinforcing fibers.

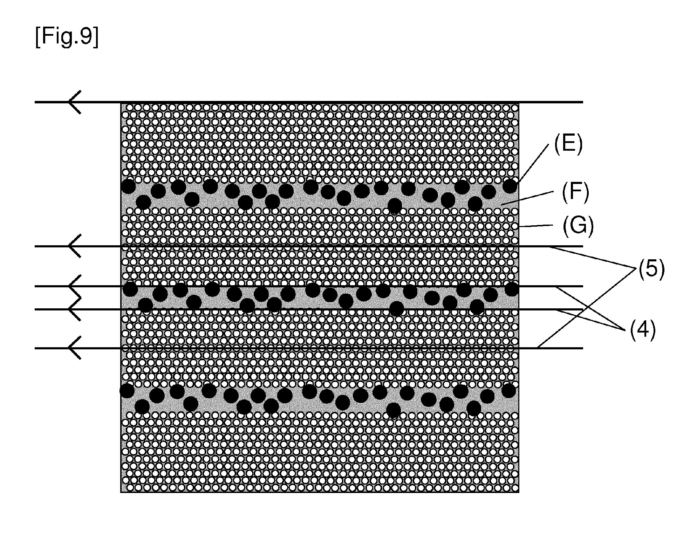

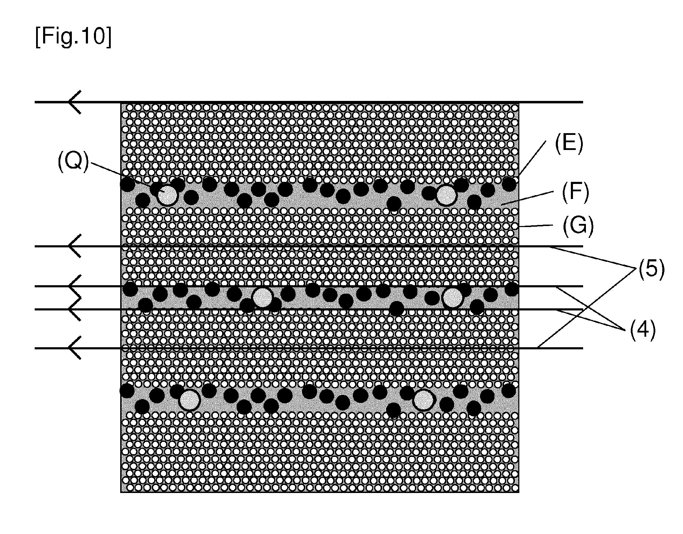

FIGS. 9-12 illustrate a cross-sectional view of such fiber reinforced composite material according to an example of preferred embodiments.

[Constituent Element (E)]

The constituent element (E) used in the present invention is required to be epoxy particles having a three-dimensional cross-linked structure. The epoxy particles having a three-dimensional cross-linked structure is incompatible with the third epoxy resin composition, which can result in a fiber reinforced composite material having an excellent stiffness, strength, and damping performance. If the epoxy particles do not have a three-dimensional cross-linked structure, the epoxy particles are more soluble in the third epoxy resin composition before curing. When the epoxy particles are dissolved in the third epoxy resin composition, the resulting fiber reinforced composite material has a lower stiffness, strength, and glass-transition temperature, as well as insufficient damping performance.

The incompatibility of the constituent element (E) with the third epoxy resin composition can be confirmed through a glass-transition temperature obtained from a storage modulus curve obtained by measuring the dynamic viscoelasticity of the cured resin composition containing the constituent element (E) and the third epoxy resin composition. In particular, the glass-transition temperature of the cured resin composition containing the constituent element (E) and the third epoxy resin composition, a molded plate containing the constituent element (E) only, and a cured resin obtained by curing the third epoxy resin composition only is measured using a dynamic viscoelasticity analyzer. If the constituent element (E) is incompatible with the third epoxy resin composition, the cured resin composition containing the constituent element (E) and the third epoxy resin composition exhibits a glass-transition temperature similar to the glass-transition temperature of the molded plate containing the constituent element (E) only and the glass-transition temperature of the cured resin obtained by curing the third epoxy resin composition only. As used herein, the term "similar" means that the difference of glass-transition temperature is between -3°C and 3°C.

The cured resin composition containing the constituent element (E) and the third epoxy resin composition, the molded plate containing the constituent element (E) only, and the cured resin obtained by curing the third epoxy resin composition only can be produced in the same manner as described for the cured resin composition containing the constituent elements (A) and (B), a molded plate containing the constituent element (A) only, and a cured resin obtained by curing the constituent element (B) only, respectively. The glass-transition temperature can be determined by dynamic viscoelasticity analysis, as described above, of the cured plate and the molded plates produced as described above.

The constituent element (E) is required to have a tan $\delta$ at 10°C of not less than 0.15 and preferably not less than 0.2. If the tan $\delta$ value is less than 0.15, the resulting fiber reinforced composite material has insufficient damping performance. The tan $\delta$ at 10°C can be determined by dynamic viscoelasticity analysis, as described above, of the cured plate produced as described above.

The constituent element (E) is preferably contained in the fiber reinforced composite material in an amount of 2-20% by mass and more preferably 2-10% by mass. If the constituent element (E) is contained in the composite material in an amount of less than 2% by mass, the fiber reinforced composite material tends to have a low damping performance, although the material has an excellent stiffness and strength. On the other hand, if the constituent element (E) is contained in the composite material in an amount of more than 20% by mass, the composite material tends to have an extremely low stiffness and strength, although the material has an excellent damping performance.

The constituent element (E) can be the same as the materials listed for the constituent element (A).

In the fiber reinforced composite material of the present invention, not less than 90 area% of the constituent element (E) is required to localize in the interlayer region, when the cross section of the composite material is observed. In particular, taking the total area of the constituent element (E) in the fiber reinforced composite material as 100 area %, not less than 90 area % of the constituent element (E) is required to localize in the interlayer region. As used herein, the term "interlayer region" refers to a layer in the fiber reinforced composite material, the layer situated between adjacent reinforcing fiber layers and not including the reinforcing fibers. The term "reinforcing fiber layer" refers to a layer formed of a resin composition containing the constituent elements (F) and (G). If the ratio of the constituent element (E) which exists in the interlayer is less than 90 area %, the epoxy particles penetrate into the reinforcing fiber bundle, thereby decreasing the modulus of the matrix resin in the reinforcing fiber bundle and then reducing the stiffness, the strength, and the damping performance.

The degree of localization of the particles in the fiber reinforced composite material can be evaluated by the following process: A photograph of a cross-section of the fiber reinforced composite material is taken at at least 200× magnification (see FIGS. 1-8). First, average boundaries (4) between a layer containing the constituent elements (F) and (G) and a layer containing no constituent element (G) are drawn on the photograph. The average boundaries (4) are drawn by the following process: First, at least 5 points on one of the boundaries between a layer containing the constituent elements (F) and (G) and a layer containing no constituent element (G) are selected on the photograph. In a case in which the fiber reinforced composite material is a laminate plate, the at least 5 points may be randomly selected. In a case in which the fiber reinforced composite material has a cylindrical or complex shape, it is preferred to select closely-spaced points such that the shape is reflected. For example, in a case in which the composite material has a cylindrical shape, it is preferred to select 6 points at no more than 60 degree intervals. Next, one surface of the fiber reinforced composite material is used as a fiducial, and the distance between the fiducial and each of the at least 5 points selected is measured, and the measurements are averaged. A line parallel to the fiducial is drawn the average distance, determined as described above, away from the fiducial. The line is the average boundary.

Next, average centerlines in the thickness direction (5) of the layers containing the constituent elements (F) and (G) are drawn. As used herein, the term "average centerline in the thickness direction" refers to a line determined by drawing average boundaries (4) for both surfaces of a layer containing the constituent elements (F) and (G), as described above, and drawing a centerline between the two average boundaries. The average centerline in the thickness direction is determined by drawing a line parallel to the average boundaries such that the distance between the centerline and one of the average boundaries equals to the distance between the centerline and another average boundary.

A region which is situated between the two average boundaries and which contains no constituent element (G) is an interlayer region. The cross sectional area of all of the particles of interest in the interlayer region is referred to as "Sum 3". The term "particles of interest" refers to particles to be measured for the degree of localization. Next, a region extending from the average centerline in the thickness direction (5) of a layer which contains the constituent elements (F) and (G) and which is adjacent to one surface of a layer containing no constituent element (G) to the average centerline in the thickness direction (5) of a layer which contains the constituent elements (F) and (G) and which is adjacent to another surface of the layer containing no constituent element (G) is defined as the entire region to be measured for the cross sectional area of the particles. The cross sectional area of all of the particles of interest in the entire region is referred to as "Sum 4".

The ratio of Sum 3 to Sum 4 (Sum 3/Sum 4) is calculated to determine a ratio of the particles of interest in an interlayer region, i.e., the degree of interlayer localization. The cross sectional area of the particles may be measured using an image analyzer or determined by cutting out the entire particle parts from a certain region in the cross-sectional photograph and determining the mass of the parts. When the total cross sectional area of the particles is being determined, some particles may have a cross section which does not pass through the center, some particles may be observed to have a particle diameter smaller than the actual particle diameter, although such particles are ignored to quantify the cross sectional area. To reduce the effects of the variation in the cross sectional area on the degree of localization, the entire width of the resultant photograph is evaluated, and at least 5 points randomly selected on the photograph are evaluated to calculate the average. When it is difficult to distinguish the particles of interest from other particles and the matrix resin, the particles of interest are selectively stained, or the components other than the particles of interest are stained for observation. An optical microscope or a scanning electromicroscope may be used depending on the size of the particles and. the staining method. In the present invention, a ratio of the particles localizing in the interlayers is measured according to area ratios. A mass ratio of particles equals to the area ratio, and thus measurement of the area ratio is substantially same as measurement of the mass ratio.

[Constituent Element (F)]

The constituent element (F) is produced by curing the third epoxy resin composition. The third epoxy resin composition contains an epoxy resin and a hardener, and can contain another ingredient such as a curing catalyst, where necessary. The epoxy resins, the hardeners, and the other ingredients such as curing catalysts listed for the constituent element (B) can be used for the constituent element (F).

[Constituent Element (G)]

Reinforcing fibers are used for the constituent element (G). The reinforcing fibers listed for the constituent element (C) can be used for the constituent element (F).

[Constituent Element (Q)]

Preferably, the fiber reinforced composite material of the present invention comprises a constituent element (Q), which contains particles having a Young's modulus of not less than 2 GPa and an average particle diameter of 5-100 $\mu$m. Inclusion of particles having a Young's modulus of not less than 2 GPa can interfere with decrease in stiffness of the interlayers due to the constituent element (E), thereby interfering with decrease in modulus and strength of the fiber reinforced composite material. More preferably, the particles have a Young's modulus of not less than 3 GPa. If the Young's modulus is less than 2 GPa, the particles have a lower Young's modulus compared with the matrix resin in the fiber reinforced composite material, thereby decreasing stiffness of the interlayers.

Preferably, not less than 90 area% of the constituent element (Q) in the fiber reinforced composite material of the present invention localizes in the interlayer region, when the cross section of the fiber reinforced composite material is observed. In particular, taking the total area of the constituent element (Q) in the fiber reinforced composite material as 100 area %, not less than 90 area % of the constituent element (Q) preferably localizes in the interlayer region. If the ratio of the constituent element (Q) which exists in the interlayer region is less than 90 area %, the constituent element (Q) penetrates into the reinforcing fiber bundle, which tends to result in reduction in the stiffness and the strength of the resulting fiber reinforced composite material.

The degree of localization of the particles in the fiber reinforced composite material can be determined in the same manner as described for the constituent element (E). To ensure that not less than 90 area % of the constituent element (Q) exists in the interlayer region, the constituent element (Q) preferably has an average particle diameter of not less than 5 $\mu$m. As used herein, "average particle diameter" refers to a volume average particle diameter and can be measured using Nanotrac particle size analyzer from Nikkiso Co., Ltd. or measured in accordance with JISK 5600-9-3 (2006) using LMS-24 from Seishin Enterprise Co., Ltd. If the constituent element (Q) has an average particle diameter of not less than 5 $\mu$m, the constituent element (Q) is unlikely to penetrate into the fiber bundle of the constituent element (G) and thus is more likely to exist in the interlayer region. The constituent element (Q) preferably has an average particle diameter of not more than 100 $\mu$m. If the constituent element (Q) has an average particle diameter of more than 100 $\mu$m, the fiber reinforced composite material of the present invention has thicker interlayers, which then readily causes voids in the interlayer regions. In this case, increase of the epoxy resin composition to reduce the voids may lead to a fiber reinforced composite material which has a low content of reinforcing fibers and which tends to exhibit a reduced stiffness and a reduced strength. The materials listed for the constituent element (P) can be used for the constituent element (Q).

[Constituent Element (H)]

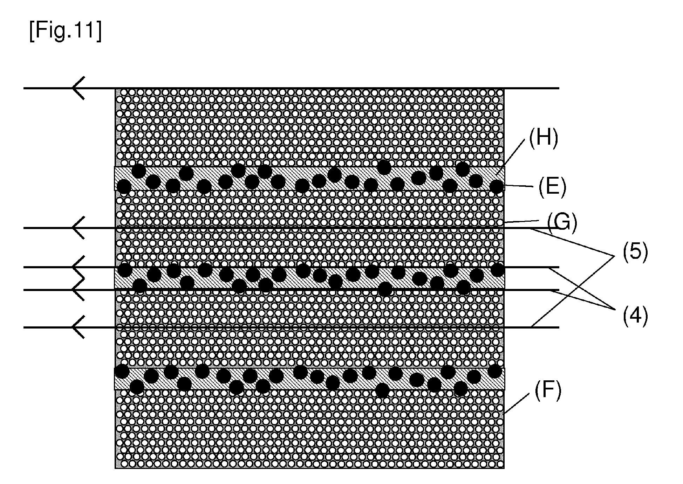

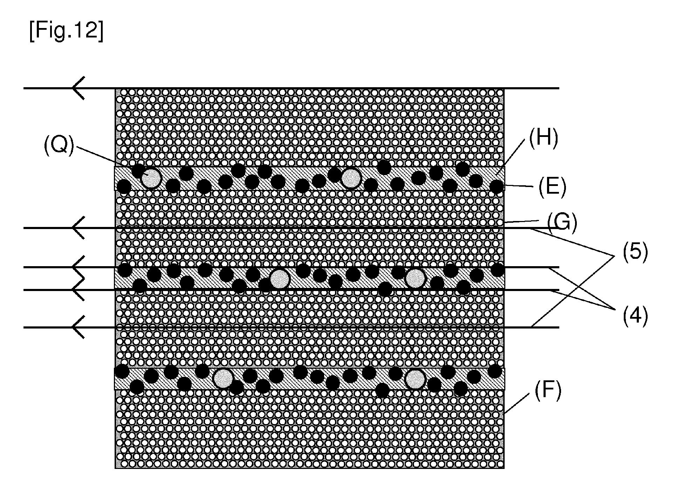

Preferably, the fiber reinforced composite material of the present invention further comprises the constituent element (H) as illustrated in FIG. 11. Preferably, the constituent element (E) is contained in the constituent element (H). In a case in which the fiber reinforced composite material of the present invention comprises the constituent element (Q), the constituent elements (E) and (Q) are preferably contained in the constituent element (H), as illustrated in FIG. 12. The constituent element (H) is produced by curing a fourth epoxy resin composition, which is incompatible with the constituent element (E). Inclusion of the constituent elements (E) and (Q) in the constituent element (H) can reduce voids caused when the prepregs are laminated and cured to produce a fiber reinforced composite material.

The fourth epoxy resin composition contains an epoxy resin and a hardener, and can contain another ingredient such as a curing catalyst, where necessary. The epoxy resins, the hardeners, and the other ingredients such as curing catalysts listed for the constituent element (B) can be used for the constituent element (H).

[Process for Producing Fiber Reinforced Composite Material]

Preferably, the fiber reinforced composite material of the present invention can be produced by a prepreg lamination molding process, a resin transfer molding process, a resin film infusion process, a hand lay-up process, a sheet molding compound process, a filament winding process, or a pultrusion process, although it is not limited thereto. Especially, the prepreg lamination molding using the prepreg of the present invention as described above is preferred, because such process can provide a fiber reinforced composite material having an excellent stiffness and strength.

The prepreg lamination molding process is a process of shaping and/or laminating prepregs and heating the shaped and/or laminated prepregs to cure the resin while applying pressure to the shaped and/or laminated prepregs. The application of heat and pressure can be performed by an appropriate process such as press forming, autoclave molding, bag molding, wrapping, and internal pressure molding.

The autoclave molding is a process of laminating a prepreg onto a tool plate having a specified shape, placing the laminated prepreg in a film bag, and applying pressure and heat to cure the resin while evacuating air from the bag. The autoclave molding can precisely control fiber orientation and cause little void, and thus can provide a mold having good mechanical properties and a high quality.

The wrapping is a process of winding a prepreg on a mandrel to form a tubular mold made of a fiber reinforced composite material. The wrapping is suitable for producing a rod article such as a golf club shaft and a fishing rod. More specifically, a prepreg is wound on a mandrel; a wrapping tape of a thermoplastic film is wound on the prepreg for fixation of the prepreg and application of pressure; the prepreg is heated in an oven to cure the resin; and the mandrel is removed to form a tubular mold.

The internal pressure molding is a molding process of placing, in a mold, a preform formed by wrapping a prepreg around a pressurizable bladder such as a thermoplastic resin tube and applying pressure by providing a high pressure of gas in the pressurizable bladder while heating the mold. This process is suitable for molding of an article having a complex shape such as golf club shafts, bats, and tennis and badminton rackets.

When the fiber reinforced composite material is molded by the autoclave molding, the optimal curing temperature and time depend on the type and amount of the selected hardener and curing catalyst. In terms of heat resistance after curing, the resin is preferably cured at a temperature of 120-220°C for a period of 0.5-8 hours. Preferably, the temperature increasing rate is 0.1-10°C/min. If the temperature increasing rate is less than 0.1°C/min, it takes too long to reach the desired curing temperature, which may result in a reduced workability. If the temperature increasing rate is more than 10°C/min, temperature difference is present within the reinforcing fibers, which may result in a nonuniformly cured material.

Molding of the fiber reinforced composite material under pressure or reduced pressure may further enhance surface quality and further reduce interior voids.

Preferably, the fiber reinforced composite material of the present invention has a loss factor which is not less than 130% of the loss factor of a fiber reinforced composite material which is the same as the fiber reinforced composite material except that it does not contain the constituent elements (E) and (Q). If the loss factor is less than 130%, the effects of improving a feel during striking a ball and reducing elbow fatigue tend to degrade when an article such as a golf club shaft, a fishing rod, and a tennis racket is produced. As used herein, the term "fiber reinforced composite material which is the same as the fiber reinforced composite material except that it does not contain the constituent elements (E) and (Q)" means that a fiber reinforced composite material is produced in the same composition and the same producing conditions as the fiber reinforced composite material to be measured, except for eliminating the constituent elements (E) and (Q), and that the material is used as a reference sample for measurement of physical properties. As used herein, the term "same composition" means that the content of each of the components in the reference sample differs from the content of each of the components in the composite material to be measured by 5% by mass or less.

Preferably, the fiber reinforced composite material of the present invention has a bending strength which is not less than 90% of the bending strength of a fiber reinforced composite material which is the same as the fiber reinforced composite material except that it does not contain the constituent elements (E) and (Q). As used herein, the term "bending strength" refers to a value at a fiber loading of 60% by volume. If the bending strength is less than 90%, a resulting article such as a golf club shaft, a fishing rod, and a tennis racket has an insufficient strength. To provide a sufficient strength, the weight may be increased.

Preferably, the fiber reinforced composite material of the present invention has a bending modulus at 0°C which is not less than 90% of the bending modulus at 0°C of a fiber reinforced composite material which is the same as the fiber reinforced composite material except that it does not contain the constituent element (E). If the bending modulus at 0°C is less than 90%, a resulting article such as a golf club shaft, a fishing rod, and a tennis racket has an insufficient stiffness. To provide an article having a sufficient stiffness, the weight may be increased.

Preferably, the fiber reinforced composite material of the present invention has a glass-transition temperature outside of the range of 10-90°C. If the glass-transition temperature is in the temperature range, the fiber reinforced composite material may be deformed during application and polishing processes.

A fiber reinforced composite material formed by curing the prepreg of the present invention and the fiber reinforced composite material of the present invention are suitable for sports applications, general industrial applications, and aerospace applications. More specifically, examples of the sports applications include golf club shafts, golf club heads, fishing rods, tennis and badminton rackets, sticks for, for example, hockey, bicycle parts, bicycle frames, bicycle wheels, bicycle rims, tent poles, skis, snowboards, and ski poles. Examples of the general industrial applications include structural materials for transportation such as motor vehicles, ships, and railroad cars, drive shafts, plate springs, windmill blades, pressure vessels, flywheels, paper rollers, roof materials, cables, pipes, and reinforcing materials for repair.

EXAMPLES

Now, the effects of the present invention will be more specifically described with reference to the examples, although the present invention is not limited to the following examples.

In the examples and comparative examples, the following materials were used as the constituent element (A) or (E).

(A-1): Three-dimensional cross-linked epoxy particles having an average particle diameter of 15 $\mu$m, a tan $\delta$ at 10°C of 1.08, and a glass-transition temperature of -10°C

(A-2): Three-dimensional cross-linked epoxy particles having an average particle diameter of 7 $\mu$m, a tan $\delta$ at 10°C of 1.08, and a glass-transition temperature of -10°C

(A-3): Three-dimensional cross-linked epoxy particles having an average particle diameter of 13 $\mu$m, a tan $\delta$ at 10°C of 0.22, and a glass-transition temperature of -2°C

(A-4): Non-cross-linked epoxy particles having an average particle diameter of 17 $\mu$m, a tan $\delta$ at 10°C of 0.18, and a glass-transition temperature of -67°C

(A-5): Three-dimensional cross-linked epoxy particles having an average particle diameter of 15 $\delta$m, a tan $\delta$ at 10°C of 0.05, and a glass-transition temperature of 118°C

(A-6): Cryogenically ground polypropylene particle "Prime Polypro (registered trademark)" J105G from Prime Polymer Co., Ltd. having an average particle diameter of 3 $\mu$m, a tan $\delta$ at 10°C of 0.07, and a glass-transition temperature of -3°C (irregularly shaped particles)

(A-7): Cryogenically ground polypropylene particle "Prime Polypro (registered trademark)" J105G from Prime Polymer Co., Ltd. having an average particle diameter of 40 $\mu$m, a tan $\delta$ at 10°C of 0.07, and a glass-transition temperature of -3°C (irregularly shaped particles)

(A-8): Nylon1 2 particle SP-500 from Toray Industries, Inc. having an average particle diameter of 5 $\mu$m, a tan $\delta$ at 10°C of 0.03, and a glass-transition temperature of 40°C

(A-9): Epoxy film having a tan $\delta$ of 1.08, a glass-transition temperature of - 10°C, and a film thickness of 30 $\mu$m, the film formed by disposing a mixture of the epoxy resin and the hardener which constitute the (A-1) onto a stainless steel plate equipped with a 30 $\mu$m spacer and press-molding the mixture at a temperature of 150°C and a pressure of 50 kg/cm$^2$ for 30 minutes.

The following materials were used as the constituent elements (B) and (D), and the third and the fourth epoxy resin.

<Epoxy Resins>

(B-1): Bisphenol A type epoxy resin "jER (registered trademark)" 1001 from Mitsubishi Chemical Corp. having an epoxy equivalent of 475

(B-2): Bisphenol A type epoxy resin "jER (registered trademark)" 828 from Mitsubishi Chemical Corp. having an epoxy equivalent of 189

(B-3): Bisphenol F type epoxy resin "Epotort (registered trademark)" YDF2001 from Nippon Steel Chemical Co., Ltd. having an epoxy equivalent of 475

(B-4): Bisphenol F type epoxy resin "jER (registered trademark)" 807 from Mitsubishi Chemical Corp. having an epoxy equivalent of 170

(B-5): Phenol novolac type epoxy resin "jER (registered trademark)" 154 from Mitsubishi Chemical Corp. having an epoxy equivalent of 178

(B-6): Dicyclopentadiene type epoxy resin "Epiclon (registered trademark)" HP7200H from DIC Corp. having an epoxy equivalent of 283

(B-7): Multifunctional amine type epoxy resin "Sumiepoxy (registered trademark)" ELM434 from Sumitomo Chemical Co. having an epoxy equivalent of 120

(B-8): Epoxy resin having a biphenyl backbone "jER (registered trademark)" YX4000 from Mitsubishi Chemical Corp. having an epoxy equivalent of 186

(B-9): Isocyanate modified epoxy resin AER 4152 from Asahi Kasei Epoxy Co., Ltd. having an epoxy equivalent of 340

(B-10): Bisphenol A type epoxy resin "jER (registered trademark)" 1004FS from Mitsubishi Chemical Corp. having an epoxy equivalent of 810

(B-11): Bisphenol A type epoxy resin "jER (registered trademark)" 1007 from Mitsubishi Chemical Corp. having an epoxy equivalent of 1930

(B-12): Bisphenol A type epoxy resin "jER (registered trademark)" 1010 from Mitsubishi Chemical Corp. having an epoxy equivalent of 4000

(B-13): Bisphenol F type epoxy resin "jER (registered trademark)" 4004P from Mitsubishi Chemical Corp. having an epoxy equivalent of 800

(B-14): Bisphenol F type epoxy resin "jER (registered trademark)" 4007 from Mitsubishi Chemical Corp. having an epoxy equivalent of 2270

(B-15): Bisphenol F type epoxy resin "jER (registered trademark)" 4010 from Mitsubishi Chemical Corp. having an epoxy equivalent of 4400

<Hardeners>

(B-16): Dicyandiamide DICY7 from Mitsubishi Chemical Corp. having an active hydrogen equivalent of 12

(B-17): 4,4'-diaminodiphenyl sulfone "Seikacure (registered trademark)" S from Wakayama Seika Kogyo Co., Ltd. having an active hydrogen equivalent of 62

(B-18): Mixture of methyl hexahydrophthalic anhydride/hexahydrophthalic anhydride "Rikacid (registered trademark)" MH700 from New Japan Chemical Co., Ltd. having a mass ratio of 70/30 and an active hydrogen equivalent of 163

<Curing Catalysts>

(B-19): Urea compound DCMU 99 from Hodogaya Chemical Co., Ltd.
(B-20): Triphenylphosphine TPP from Hokko Chemical Industry Co., Ltd.

The following materials were used as the constituent elements (C) and (G).

<Reinforcing Fibers>

(C-1): Carbon fiber "Torayca (registered trademark)" T700S from Toray Industries, Inc. having a tensile modulus of 230 GPa and a tensile strength of 4900 MPa
(C-2): Carbon fiber woven fabric "Torayca Fabric (registered trademark)" BT70-30 from Toray Industries, Inc., which is formed by plain-weaving "Torayca (registered trademark)" T700 carbon fibers and has a weight of 300 g/m2
(C-3): Carbon fiber "Torayca (registered trademark)" T800S from Toray Industries, Inc. having a tensile modulus of 294 GPa and a tensile strength of 5880 MPa
(C-4): Carbon fiber "Torayca (registered trademark)" M40J from Toray Industries, Inc. having a tensile modulus of 377 GPa and a tensile strength of 4400 MPa
(C-5): Carbon fiber "Torayca (registered trademark)" M46J from Toray Industries, Inc. having a tensile modulus of 436 GPa and a tensile strength: 4200 MPa
(C-6): Carbon fiber "Torayca (registered trademark)" M50J from Toray Industries, Inc. having a tensile modulus of 475 GPa and a tensile strength of 4120 MPa

In the examples and comparative examples, the following materials were used as the constituent element (P) or (Q).

(P-1): Carbon particle "NICABEADS (registered trademark)" ICB-2020 from Nippon Carbon Co., Ltd. having a Young's modulus of 35 GPa and an average particle diameter of 20 m
(P-2): Metal plated polymer particle "Micropearl (registered trademark)" CU215 from Sekisui Chemical Co., Ltd. having a Young's modulus of 4.8 GPa and an average particle diameter of 15 $\mu$m

Other raw materials are as follows:

- Polyvinyl formal "Vinylec (registered trademark)" E from Chisso Corp.
- S-B-M terpolymer "Nanostrength (registered trademark)" E40F from Arkema Inc. (S is styrene, B is 1,4-butadiene, and M is methyl methacrylate)
- Polyethersulfone "Sumikaexcel (registered trademark)" PES5003P from Sumitomo Chemical Co.

(1) Process for Producing Epoxy Particles of Constituent Element (A)

The epoxy resin, the hardener, and the curing catalyst shown in Table 1 were added to and dissolved in a solvent combination of methylene chloride and methanol to give a viscous polymer solution. A 5% aqueous solution of polyvinyl alcohol was continuously added to the polymer solution for 15 minutes with stirring at room temperature to give an initial water-in-oil emulsion, which was finally changed to an oil-in-water emulsion. Next, the emulsion was warmed to 60°C with stirring, and the methylene chloride and the methanol were removed by evaporation. Then the emulsion was autoclaved at 85°C for 2.5 hours and then at 150°C for 2 hours to cure the epoxy resin. The resultant was cooled to room temperature and filtered to give particles ((A-1)-(A-5)).

(2) Process for Producing Particles by Cryogenic Grinding

Resin pellets were cryogenically ground using a pulverizer from Hosokawa Micron Corp. while cooling to no more than the glass-transition temperature with dry ice.

(3) Process for Measuring Volume Average Particle Diameter

A volume average particle diameter was measured in accordance with JIS K5600-9-3(2006), using LMS-24 from Seishin Enterprise Co., Ltd. by a laser diffraction scattering method.

(4) Process for Measuring Young's Modulus of Particles

Particles were compressed at a compression rate of 2.6 mN/sec using micro-compression testing machine MCTM-500 from Shimadzu Corp. The load (N) and the compression displacement (mm) at 10% displacement were measured, and the Young's modulus was calculated from the measurements using the following equation:

$$E = (3/\sqrt{2}) \times F \times L^{-3/2} \times D^{-1/2}$$

E: Young's modulus
F: Compression load at 10% displacement (N)
L: Compression displacement at 10% displacement (mm)
D: Particles diameter (mm)

(5) Process for Producing Molded Plate of Constituent Element (A)

A mixture of the epoxy resin, the hardener, and the other additives which constitute the constituent element (A) was defoamed in a vacuum. The defoamed mixture was placed in a mold given a thickness of 2 mm by a 2 mm thick "Teflon (registered trademark)" spacer. The mixture was cured under conditions leading to complete cure to provide a molded plate with no void.

(6) Process for Producing Cured Material of Constituent Element (B)

The constituent element (B) was defoamed in a vacuum and then placed in a mold given a thickness of 2 mm by a 2 mm thick "Teflon (registered trademark)" spacer. Then the constituent element (B) was completely cured under conditions specified for respective reference examples.

(7) Process for Producing Cured Material of Resin Composition Containing Constituent Element (A) (Constituent Elements (A) and (P)) and Constituent Element (B)

The constituent element (A) (the constituent elements (A) and (P)) and the constituent element (B) were kneaded, and then the resultant resin composition was defoamed in a vacuum. The defoamed resin composition was placed in a mold given a thickness of 2 mm by a 2 mm thick "Teflon (registered trademark)" spacer. The constituent element (B) was cured under the same conditions as described in (5).

(8) Process for Measuring Glass-Transition Temperature and Tan $\delta$ At 10°C of Cured Resin or Molded Plate

The cured resin or the molded plate was cut into a sample having a width of 13 mm and a length of 35 mm using a diamond cutter. The sample was warmed to a temperature of from -70°C to -250°C at a temperature increase rate of 5°C/min using a dynamic viscoelasticity analyzer (DMAQ800 from TA Instruments, Inc.) and measured in a bending mode with a frequency of 1.0 Hz for the storage elastic modulus and tan $\delta$. The storage elastic modulus onset temperature was considered as the glass-transition temperature.

(9) Process for Confirming Cure of Cured Resin

The cured resin was cut at any location into a sample having a weight of about 10 mg. The sample was warmed from room temperature to 350°C at a temperature increase rate of 10°C/min using a differential scanning calorimeter (DSC 2910 from TA Instruments, Inc.). Complete cure was confirmed by the absence of exotherm peak.

(10) Process for Measuring Distribution of Particles in Prepreg

A prepreg was sandwiched and joined between two flat "Teflon (registered trademark)" resin plates. The sandwiched prepreg was warmed to a highest temperature specified for the respective examples and comparative examples at a temperature increase rate of 2°C/h to gel or cure the prepreg. The resultant cured prepreg was cut in a direction perpendicular to the "Teflon (registered trademark)" resin plate-contacting surface using an edged cutter. If the cut surface was not smooth, the surface was rubbed. The cut surface was photographed under optical microscopy at at least 200 × magnification so that the top and bottom surfaces of the cured prepreg were in the field of view. Next, the thickness of 5 points randomly selected on the microphotograph was measured, and the measurements were averaged to provide the average thickness of the prepreg.

Two lines parallel to each of the surfaces of the cured prepreg were drawn a distance corresponding to 20% of the thickness of the prepreg away from each of the surfaces of the prepreg. Next, the cross sectional area of each of the particles of interest between each of the surfaces and each of the 20% thickness lines is summed to provide Sum 1, and the cross sectional area of each of the particles of interest disposed across the thickness of the prepreg is summed to provide Sum 2. The term "particles of interest" refers to particles to be measured for the degree of localization. The ratio of Sum 1 to Sum 2 (Sum 1/Sum 2) was calculated. The total cross sectional area of the particles was determined by cutting out the particle parts from a certain region in the cross-sectional photograph and determining the mass of the parts. At least 5 points randomly selected on the photograph were measured, and the measurements were averaged. When it was difficult to distinguish the particles of interest dispersed in the matrix resin on the photomicrograph, the particles of interest were stained, or the components other than the particles of interest were stained for distinction.

(11) Process for Measuring Distribution of Particles in Fiber Reinforced Composite Material

A fiber reinforced composite material was cut in a direction perpendicular to the surface, using a diamond cutter. If the cut surface of the cured material was not smooth, the surface was rubbed. The cut surface was photographed under optical microscopy at at least 200× magnification so that at least one surface of the fiber reinforced composite material was in the field of view. In accordance with the process for measuring the distribution of the particles in fiber reinforced composite material as described herein, 5 points were randomly selected on the cross-sectional photograph, and the average boundary and the average centerline in the thickness direction were drawn. In accordance with the process for measuring the distribution of the particles in fiber reinforced composite material as described herein, the particle parts were cut out from the cross-sectional photograph, and the mass of the parts was determined. The mass was used to determine a ratio of Sum 3, which is the total cross sectional area of the particles of interest in the interlayer region, to Sum 4, which is the total cross sectional area of the particles of interest in the entire region (Sum 3/Sum4: degree of interlayer localization). When it was difficult to distinguish the particles of interest dispersed on the photomicrograph, the particles of interest were stained, or the components other than the particles of interest were stained for distinction.

(12) Process for Measuring Loss Factor of Fiber Reinforced Composite Material

The fiber reinforced composite material was cut into a sample having a width 10 mm and a length of 200 mm using a diamond cutter. In a case in which the material was unidirectionally oriented, the material was cut so that the longitudinal direction of the sample was parallel to the fiber direction. In a case in which the material was a woven fabric, the material was cut so that the longitudinal direction of the sample is parallel to one of the fiber directions. A region of the sample extending 35 mm from the longitudinal end of the sample was grasped with a clamp, and the sample was deflected downward by 3 cm at a position 195 mm away from the end. The oscillation generated when the deflection was released was measured with strain gages bonded to a position 50 mm away from the end. The resultant waveform was used to determine the loss factor.

(13) Process for Measuring Bending Modulus and Bending Strength of Fiber Reinforced Composite Material

In a case in which the fiber reinforced composite material was unidirectionally oriented, bending strength at 0° and 90° of the composite material was measured as an indicator of the bending strength of the composite material. In a case in which the material was a woven fabric, bending strength in a direction parallel to one of the fiber directions was measured. The bending strength at 90° of the unidirectionally oriented material and the bending strength of the woven fabric were measured as described below. The fiber reinforced composite material was cut into a sheet having a thickness of 2 mm, a width of 15 mm, and a length of 60 mm. The sheet was measured using an Instron universal testing machine from Instron Corp. with a crosshead speed of 1.0 mm/min, a span of 40 mm, an indenter diameter of 10 mm, and a support diameter of 4 mm to determine the bending strength. The bending modulus at 0° and the bending modulus of the unidirectionally oriented material, and the bending modulus of the woven fabric were measured as described below. The fiber reinforced composite material was cut into a sheet having a thickness of 2 mm, a width of 15 mm, and a length of 100 mm. The four-point bending strength of the sheet was measured using an Instrori universal testing machine from Instron Corp. with a crosshead speed of 5.0 mm/min, a support span of 81 mm, a indenter span of 27 mm, a support diameter of 4 mm, and an indenter diameter of 10 mm. The bending strength and data for 5N-50N were used to determine the bending modulus. The actual Vf was determined in accordance with the combustion method described in JIS 7075 (1991) and the resulting bending strength was used to determine the bending strength at a Vf of 60%.

.

(14) Process for Measuring Glass-Transition Temperature of Fiber Reinforced Composite Material

The glass-transition temperature of the fiber reinforced composite material was measured in the same manner as described in (8).

(Reference Examples 1-9 and 20-27)

The epoxy resin in the respective reference examples 1-9 and 20-27 shown in Tables 2, 3, and 5-7 was heated and melt-kneaded, and then cooled to 60°C. Then the respective hardener and the respective curing catalyst were added to prepare an epoxy resin composition. The resin composition was defoamed in a vacuum and placed in a mold given a thickness of 2 mm by a 2 mm thick "Teflon (registered trademark)" spacer. The composition was cured under conditions specified for the respective reference examples to provide a cured resin having a thickness of 2 mm. The glass-transition temperature of the cured resin is shown in the respective Tables. The reference examples 1-9 and 21-27 exhibited a good glass-transition temperature of 100°C or higher. The reference example 20 had a glass-transition temperature of lower than 100°C. DSC analysis showed that any of the cured materials of the reference examples did not exhibit any exotherm peak, which means that the materials were completely cured.

(Reference Example 10)

The epoxy resin in the reference example 10 shown in Table 10 was melt-kneaded and then cooled to 80°C. Then the hardener was added to prepare an epoxy resin composition. The resin composition was cured in the same manner as in the reference example 1 except for a curing temperature of 180°C and a curing period of 2 hours. The cured material exhibited a good glass-transition temperature and a good exotherm peak result.

(Reference Example 11)

The curing catalyst in the reference example 11 shown in Table 10 was added to and dissolved at 50°C in the hardener, and then cooled to room temperature. Then the epoxy resin was added to prepare an epoxy resin composition. The resin composition was cured in the same manner as in the reference example 1. The cured material exhibited a good glass-transition temperature and a good exotherm peak result.

(Reference Examples 12, 13, 16, and 17)

The epoxy resin in the reference examples 12, 13, 16, and 17 shown in Tables 3-5 was melt-kneaded. Then the polyvinyl formal or the S-B-M terpolymer was added and dissolved at 170°C over an hour. Next, the mixture was cooled to 60°C. Then the hardener and the curing catalyst were added to prepare an epoxy resin composition. The resin composition was cured in the same manner as in the reference example 1. The cured material exhibited a good glass-transition temperature and a good exotherm peak result.

(Reference Examples 14 and 15)

The epoxy resin in the reference examples 14 and 15 shown in Table 4 was melt-kneaded. Then the polyethersulfone was added and dissolved at 170°C over an hour. Next, the mixture was cooled to 80°C. Then the hardener was added to prepare an epoxy resin composition. The cured material exhibited a good glass-transition temperature and a good exotherm peak result.

(Reference Examples 18 and 19)

The epoxy resin in the reference examples 18 and 19 shown in Table 5 was melt-kneaded. The carbon particles or metal plated polymer particles were added, kneaded, and dispersed. Next, the mixture was cooled to 80°C. Then the hardener was added to prepare an epoxy resin composition. The cured material exhibited a good glass-transition temperature and a good exotherm peak result.

(Reference Examples 28-43 and 54-61)

The epoxy resin in the reference examples 28-43 and 54-61 shown in Tables 8, 9, and 11 was heated and melt-kneaded, and then cooled to 60°C. The constituent element (A) or (E) was added and kneaded. Then the hardener and the curing catalyst were added at the same temperature to prepare an epoxy resin composition. The epoxy resin composition was cured in the same manner as in the reference example 1. In the reference example 31, the material (A-4) was dissolved in the epoxy resin composition, and thus the cured material did not exhibit a glass-transition temperature corresponding to the material (A-4). In the reference examples 28-30, 32-43, and 54-61, the constituent element (A) or (E) was not dissolved in the epoxy resin composition.

(Reference Example 44)

The epoxy resin in the reference example 44 shown in Table 10 was melt-kneaded and cooled to 80°C. Then the constituent element (A) or (E) was added and kneaded. Then the hardener was added to prepare an epoxy resin composition. The resin composition was cured in the same manner as in the reference example 10. The resin composition was cured in the same manner as in the reference example 10. The cured resin composition exhibited a good glass-transition temperature and a good exotherm peak result.

(Reference Example 45)

The curing catalyst in the reference example 45 shown in Table 10 was added to and dissolved at 50°C in the hardener, and then cooled to room temperature. On the other hand, the constituent element (A) or (E) was kneaded with the epoxy resin at room temperature. The solution and the mixture were kneaded at room temperature to prepare an epoxy resin composition. The resin composition was cured in the same manner as in the reference example 1. The cured resin composition exhibited a good glass-transition temperature and a good exotherm peak result.

(Reference Examples 46, 47, 50, and 51)

The epoxy resin in the reference examples 46, 47, 50, and 51 shown in Table 10 was melt-kneaded. Then the polyvinyl formal or S-B-M terpolymer was added and dissolved at 170°C over an hour. Next, the mixture was cooled to 60°C. The constituent element (A) or (E) was added and kneaded. Then the hardener and the curing catalyst were added to prepare an epoxy resin composition. The resin composition was cured in the same manner as in the reference example 1. The cured resin composition exhibited a good glass-transition temperature and a good exotherm peak result.

(Reference Examples 48 and 49)

The epoxy resin in the reference example 48 and 49 shown in Table 10 was melt-kneaded. Then the polyethersulfone was added and dissolved at 170°C over an hour. Next, the mixture was cooled to 80°C. Then the constituent element (A) or (E) was added and kneaded. Then the hardener was added to prepare an epoxy resin composition. The resin composition was cured in the same manner as in the reference example 10. The cured material exhibited a good glass-transition temperature and a good exotherm peak result.

(Reference Examples 52 and 53)

The epoxy resin in the reference examples 52 and 53 shown in Tables 10 and 11 was melt-kneaded. Then the polyethersulfone was added and dissolved at 170°C over an hour. Next, the mixture was cooled to 80°C. The constituent element (A) or (E) and the carbon particles or metal plated polymer particles were added and kneaded. Then the hardener was added to prepare an epoxy resin composition. The resin composition was cured in the same manner as in the reference example 10. The cured material exhibited a good glass-transition temperature and a good exotherm peak result.

(Comparative example 1)

The constituent element (B) obtained in the reference example 1 was applied onto a release paper using a reverse roll coater to produce two resin films. Next, each of the resin films were laminated onto each of the surfaces of a sheet formed by unidirectionally arranging the (C-1) fibers, and the resulting laminate was pressed using heated press rolls to impregnate the fibers with the resin composition obtained in the reference example 1, thereby producing a unidirectional prepreg precursor having a mass of the reinforcing fibers per unit area of 125 g/m$^2$ and a fiber content of 68% by mass. Next, 20 layers of the unidirectional prepreg precursors were laminated with the same fiber orientation, and autoclaved at the same temperature and for the same period as in the reference example 1 and at a pressure of 0.3 MPa to cure the resin, thereby producing a fiber reinforced composite material. The loss factor, bending strength at 90°, bending modulus and strength at 0°, and Tg were measured. The composite material exhibited a low loss factor, which was undesirable.

(Example 1)

The material (A-1) as the constituent element (A) was uniformly applied onto one surface of the unidirectional prepreg precursor obtained in the comparative example 1, sandwiched between release papers, and passed through heated press rolls to provide a unidirectional prepreg. The unidirectional prepreg exhibited a good degree of surface localization of 98%. Next, 19 layers of the unidirectional prepregs were laminated with the same fiber orientation and with the surfaces containing the applied constituent element (A) up. Then additional one layer of the unidirectional prepreg precursor obtained in the comparative example 1 was laminated, and a fiber reinforced composite material was produced in the same manner as in the comparative example 1. The composite material exhibited a good degree of interlayer localization of 96%. And the composite material exhibited a good loss factor, a good bending strength at 90°, a good bending modulus at 0°, and a good bending strength at 0° which were 188%, 98%, 101%, and 100%, respectively, compared with the comparative example 1. The composite material also exhibited a good Tg.

(Comparative Example 2)

A unidirectional prepreg precursor and a fiber reinforced composite material were produced in the same manner as in the comparative example 1, except that the resin composition in the reference example 2 was used as the constituent element (B). The composite material exhibited a low loss factor, which was undesirable.

(Example 2)

A unidirectional prepreg was produced in the same manner as in the example 1, except that the material (A-2) as the constituent element (A) was uniformly applied onto one surface of the unidirectional prepreg precursor obtained in the comparative example 2. The unidirectional prepreg exhibited a good degree of surface localization, although the degree was slightly reduced compared with the example 1, because the constituent element (A) had a reduced particle diameter compared with the example 1. Next, a fiber reinforced composite material was produced in the same manner as in the example 1. The composite material exhibited a good degree of interlayer localization, although the degree was slightly reduced compared with the example 1. The composite material exhibited a goof loss factor, a good bending strength at 90°, a good bending modulus at 0°, and a good bending strength at 0° which were 176%, 92%, 98%, and 99%, respectively, compared with the comparative example 2, although these parameters were slightly reduced compared with the example 1, because the constituent element (A) exhibited a reduced degree of interlayer localization. The composite material also exhibited a good Tg.

(Example 3)

A unidirectional prepreg was produced in the same manner as in the example 1, except that the material (A-3) was used as the constituent element (A). The unidirectional prepreg exhibited a good degree of surface localization of 99%. Next, a fiber reinforced composite material was produced in the same manner as in the example 1. The composite material exhibited a good degree of interlayer localization of 96%. The composite material exhibited a good loss factor, a good bending strength at 90°, a good bending modulus at 0°, and a good bending strength at 0° which were 145%, 98%, 100%, and 100%, respectively, compared with the comparative example 1, although the loss factor was slightly reduced compared with the example 1, because the constituent element (A-3) exhibited a reduced $\tan \delta$ at 10°C compared with the material (A-1). The composite material also exhibited a good Tg, although the Tg was reduced compared with the example 1.

(Example 4)

A unidirectional prepreg was produced in the same manner as in the example 2, except that the material (A-1) was used as the constituent element (A) in an amount of 7% by mass. The unidirectional prepreg exhibited a good degree of surface localization of 99%. Next, a fiber reinforced composite material was produced in the same manner as in the example 1. The composite material exhibited a good degree of interlayer localization of 95%. The composite material exhibited a loss factor of 210%, a bending strength at 90° of 93%, a bending modulus at 0° of 99%, and a bending strength at 0° of 100% compared with the comparative example 1. The composite material also exhibited a good Tg. And the composite material exhibited a significantly improved loss factor compared with the example 1.

(Example 5)

A unidirectional prepreg was produced in the same manner as in the example 1, except that the constituent element (A) was added in an amount of 15% by mass. The unidirectional prepreg exhibited a good degree of surface localization of 99%. Next, a fiber reinforced composite material was produced in the same manner as in the example 1. The composite material exhibited a good degree of interlayer localization of 96%. The composite material exhibited a good loss factor, a good bending strength at 90°, a good bending modulus at 0°, and a good bending strength at 0° which were 250%, 91 %, 96%, and 98%, respectively, compared with the comparative example 1. The composite material also exhibited a good Tg. The composite material exhibited a significantly improved loss factor compared with the example 1, although the material exhibited a reduced bending strength and a reduced bending modulus at 0°.

(Comparative Example 3)

A unidirectional prepreg precursor and a fiber reinforced composite material were produced in the same manner as in the comparative example 1, except that the resin composition in the reference example 3 was used as the constituent element (B). The composite material exhibited a low loss factor, which was undesirable.

(Example 6)

A unidirectional prepreg was produced in the same manner as in the example 1, except that the resin composition in the reference example 3 was used as the constituent element (B). The unidirectional prepreg exhibited a good degree of surface localization of 99%. Next, a fiber reinforced composite material was produced in the same manner as in the example 1. The composite material exhibited a good degree of interlayer localization of 97%. The composite material exhibited a good loss factor, a good bending strength at 90°, a good bending modulus at 0°, and a good bending strength at 0° which were 180%, 98%, 96%, and 100%, respectively, compared with the comparative example 3. Inclusion of the hardener in an amount of 1.0 equivalent led to a slightly improved bending strength compared with the example 1. The composite material also exhibited a good Tg.

(Comparative Example 4)

A unidirectional prepreg precursor and a fiber reinforced composite material were produced in the same manner as in the comparative example 1, except that the resin composition in the reference example 4 was used as the constituent element (B). The composite material exhibited a low loss factor, which was undesirable.

(Example 7)

A unidirectional prepreg was produced in the same manner as in the example 1, except that the resin composition in the reference example 4 was used as the constituent element (B). The unidirectional prepreg exhibited'a good degree of surface localization of 99%. Next, a fiber reinforced composite material was produced in the same manner as in the example 1. The composite material exhibited a good degree of interlayer localization of 97%. The composite material exhibited a good loss factor, a good bending strength at 90°, a good bending modulus at 0°, and a good bending strength at 0° which were 174%, 98%, 100%, and 100%, respectively, compared with the comparative example 4. Inclusion of the hardener in an amount of 0.8 equivalents led to a slightly improved bending strength compared with the example 1. The composite material also exhibited a good Tg.

(Example 8)

A unidirectional prepreg was produced in the same manner as in the example 1, except that the resin composition in the reference example 2 was used as the constituent element (B). The unidirectional prepreg exhibited a good degree of surface localization of 99%. Next, a fiber reinforced composite material was produced in the same manner as in the example 1. The composite material exhibited a good degree of interlayer localization of 97%. The composite material exhibited a good loss factor, a good bending strength at 90°, a good bending modulus at 0°, and a good bending strength at 0° which were 180%, 98%, 97%, and 101 %, respectively, compared with the comparative example 2. Inclusion of the curing catalyst in the constituent element (B) in an amount of 2% by mass led to a slightly improved bending strength compared with the example 1. The composite material also exhibited a good Tg.

(Comparative Example 5)

A unidirectional prepreg precursor and a fiber reinforced composite material were produced in the same manner as in the comparative example 1, except that the resin composition in the reference example 5 was used as the constituent element (B). The composite material exhibited a low loss factor, which was undesirable.

(Example 9)

A unidirectional prepreg was produced in the same manner as in the example 1, except that the resin composition in the reference example 5 was used as the constituent element (B). The unidirectional prepreg exhibited a good degree of surface localization of 98%. Next, a fiber reinforced composite material was produced in the same manner as in the example 1. The composite material exhibited a good degree of interlayer localization of 97%. The composite material exhibited a loss factor of 184%, a bending strength at 90° of 99%, a bending modulus at 0° of 100%, and a bending strength at 0° of 100% compared with the comparative example 5. The composite material also exhibited a good Tg. Use of the phenol novolac type epoxy resin as part of the epoxy resin as the constituent element (B) led to an improved bending strength and an improved Tg compared with the example 1.

(Comparative Example 6)

A unidirectional prepreg precursor and a fiber reinforced composite material were produced in the same manner as in the comparative example 1, except that the resin composition in the reference example 20 was used as the constituent element (B). The composite material exhibited a low loss factor and a low Tg, which were undesirable.

(Example 10)

A unidirectional prepreg was produced in the same manner as in the example 1, except that the resin composition in the reference example 20 was used as the constituent element (B). The unidirectional prepreg exhibited a good degree of surface localization of 98%. Next, a fiber reinforced composite material was produced in the same manner as in the example 1. The composite material exhibited a good degree of interlayer localization of 95%. The composite material exhibited a good loss factor, a good bending strength at 90°, a good bending modulus at 0°, and a good bending strength at 0° which were 196%, 98%, 100%, and 99%, respectively, compared with the comparative example 6. Use of the bisphenol F type epoxy resin in the epoxy resin as the constituent element (B), however, led to a reduced Tg compared with the example 1.

(Comparative Example 7)

A unidirectional prepreg precursor and a fiber reinforced composite material were produced in the same manner as in the comparative example 1, except that the resin composition in the reference example 6 was used as the constituent element (B). The composite material exhibited a low loss factor, which was undesirable.

(Example 11)

A unidirectional prepreg was produced in the same manner as in the example 1, except that the resin composition in the reference example 6 was used as the constituent element (B). The unidirectional prepreg exhibited a good degree of surface localization of 98%. Next, a fiber reinforced composite material was produced in the same manner as in the example 1. The composite material exhibited a'good degree of interlayer localization of 96%. The composite material exhibited a good loss factor, a good bending strength at 90°, a good bending modulus at 0°, and a good bending strength at 0° which were 172%, 99%, 104%, and 99%, respectively, compared with the comparative example 7. Use of the dicyclopentadiene type epoxy resin in the epoxy resin as the constituent element (B) led to a significantly improved Tg compared with the example 1.

(Comparative Example 8)

A unidirectional prepreg precursor and a fiber reinforced composite material were produced in the same manner as in the comparative example 1, except that the resin composition in the reference example 7 was used as the constituent element (B). The composite material exhibited a low loss factor, which was undesirable.

(Example 12)

A unidirectional prepreg was produced in the same manner as in the example 1, except that the resin composition in the reference example 7 was used as the constituent element (B). The unidirectional prepreg exhibited a good degree of surface localization of 99%. Next, a fiber reinforced composite material was produced in the same manner as in the example 1. The composite material exhibited a good degree of interlayer localization of 97%. The composite material exhibited a good loss factor, a good bending strength at 90°, a good bending modulus at 0°, and a good blending strength at 0° which were 176%, 98%, 99%, and 101%, respectively, compared with the comparative example 8. Use of the multifunctional amine type epoxy resin in the epoxy resin as the constituent element (B) led to a significantly improved bending strength and a significantly improved Tg compared with the example 1.

(Comparative Example 9)

A unidirectional prepreg precursor and a fiber reinforced composite material were produced in the same manner as in the comparative example 1, except that the resin composition in the reference example 8 was used as the constituent element (B). The composite material exhibited a low loss factor, which was undesirable.

(Example 13)

A unidirectional prepreg was produced in the same manner as in the example 1, except that the resin composition in the reference example 8 was used as the constituent element (B). The unidirectional prepreg exhibited a good degree of surface localization of 99%. Next, a fiber reinforced composite material was produced in the same manner as in the example 1. The composite material exhibited a good degree of interlayer localization of 95%. The composite material exhibited a good loss factor, a good bending strength at 90°, a good bending modulus at 0°, and a good bending strength at 0° which were 174%, 98%, 105%, and 99%, respectively, compared with the comparative example 9. Use of the epoxy resin having a biphenyl backbone in the epoxy resin as the constituent element (B) led to a significantly improved bending strength and a significantly improved Tg compared with the example 1.

(Comparative Example 10)

A unidirectional prepreg precursor and a fiber reinforced composite material were produced in the same manner as in the comparative example 1, except that the resin composition in the reference example 9 was used as the constituent element (B). The composite material exhibited a low loss factor, which was undesirable.

(Example 14)

A unidirectional prepreg was produced in the same manner as in the example 1, except that the resin composition in the reference example 9 was used as the constituent element (B). The unidirectional prepreg exhibited a good degree of surface localization of 99%. Next, a fiber reinforced composite material was produced in the same manner as in the example 1. The composite material exhibited a good degree of interlayer localization of 96%. The composite material exhibited a good loss factor, a good bending strength at 90°, a good bending modulus at 0°, and a good bending strength at 0° which were 182%, 97%, 99%, and 101%, respectively, compared with the comparative example 10. Use of the isocyanate modified epoxy resin in the epoxy resin as the constituent element (B) led to an improved Tg compared with the example 1, although the bending strength was slightly reduced.

(Comparative Example 11)

A unidirectional prepreg precursor and a fiber reinforced composite material were produced in the same manner as in the comparative example 1, except that the resin composition in the reference example 10 was used as the constituent element (B). The composite material exhibited a low loss factor, which was undesirable.

(Example 15)

A unidirectional prepreg was produced in the same manner as in the example 1, except that the resin composition in the reference example 10 was used as the constituent element (B). The unidirectional prepreg exhibited a good degree of surface localization of 98%. Next, a fiber reinforced composite material was produced in the same manner as in the example 1. The composite material exhibited a good degree of interlayer localization of 95%. The composite material exhibited a good loss factor, a good bending strength at 90°, a good bending modulus at 0°, and a good bending strength at 0° which were 180%, 98%, 98%, and 101%, respectively, compared with the comparative example 11. Use of the 4,4'-diaminodiphenyl sulfone as the hardener in the constituent element (B) led to an improved Tg compared with the example 13.

(Comparative Example 12)

A unidirectional prepreg precursor and a fiber reinforced composite material were produced in the same manner as in the comparative example 1, except that the resin composition in the reference example 12 was used as the constituent element (B). The composite material exhibited a low loss factor, which was undesirable.

(Example 16)

A unidirectional prepreg was produced in the same manner as in the example 1, except that the resin composition in the reference example 12 was used as the constituent element (B). The unidirectional prepreg exhibited a good degree of surface localization of 99%. Next, a fiber reinforced composite material was produced in the same manner as in the example 1. The composite material exhibited a good degree of interlayer localization of 95%. The composite material exhibited a good loss factor, a good bending strength at 90°, a good bending modulus at 0°, and a good bending strength at 0° which were 176%, 99%, 100%, and 100%, respectively, compared with the comparative example 12. The composite material also exhibited a good Tg.

(Comparative Example 13)

A unidirectional prepreg precursor and a fiber reinforced composite material were produced in the same manner as in the comparative example 1, except that the resin composition in the reference example 13 was used as the constituent element (B). The composite material exhibited a low loss factor, which was undesirable.

(Example 17)

A unidirectional prepreg was produced in the same manner as in the example 1, except that the resin composition in the reference example 13 was used as the constituent element (B). The unidirectional prepreg exhibited a good degree of surface localization of 99%. Next, a fiber reinforced composite material was produced in the same manner as in the example 1. The composite material exhibited a good degree of interlayer localization of 96%. The composite material exhibited a good loss factor, a good bending strength at 90°, a good bending modulus at 0°, and a good bending strength at 0° which were 176%, 99%, 103%, and 99%, respectively, compared with the comparative example 13. The composite material also exhibited a good Tg.

(Comparative Example 14)

A unidirectional prepreg precursor and a fiber reinforced composite material were produced in the same manner as in the comparative example 11, except that the resin composition in the reference example 14 was used as the constituent element (B). The composite material exhibited a low loss factor, which was undesirable.

(Example 18)

A unidirectional prepreg was produced in the same manner as in the example 1, except that the resin composition in the reference example 14 was used as the constituent element (B). The unidirectional prepreg exhibited a good degree of surface localization of 99%. Next, a fiber reinforced composite material was produced in the same manner as in the example 1. The composite material exhibited a good degree of interlayer localization of 96%. The composite material exhibited a good loss factor, a good bending strength at 90°, a good bending modulus at 0°, and a good bending strength at 0° which were 184%, 99%, 103%, and 98%, respectively, compared with the comparative example 14. The composite material also exhibited a good Tg.

(Comparative Example 15)

A unidirectional prepreg precursor and a fiber reinforced composite material were produced in the same manner as in the comparative example 11, except that the resin composition in the reference example 15 was used as the constituent element (B). The composite material exhibited a low loss factor, which was undesirable.

(Example 19)

A unidirectional prepreg was produced in the same manner as in the example 1, except that the resin composition in the reference example 15 was used as the constituent element (B). The unidirectional prepreg exhibited a good degree of surface localization of 99%. Next, a fiber reinforced composite material was produced in the same manner as in the example 1. The composite material exhibited a good degree of interlayer localization of 96%. The composite material exhibited a good loss factor, a good bending strength at 90°, a good bending modulus at 0°, and a good bending strength at 0° which were 180%, 99%, 103%, and 98%, respectively, compared with the comparative example 14. The composite material also exhibited a good Tg.

(Comparative Example 16)

A unidirectional prepreg precursor and a fiber reinforced composite material were produced in the same manner as in the comparative example 1, except that the resin composition in the reference example 16 was used as the constituent element (B). The composite material exhibited a low loss factor, which was undesirable.

(Example 20)

A unidirectional prepreg was produced in the same manner as in the example 1, except that the resin composition in the reference example 16 was used as the constituent element (B). The unidirectional prepreg exhibited a good degree of surface localization of 98%. Next, a fiber reinforced composite material was produced in the same manner as in the example 1. The composite material exhibited a good degree of interlayer localization of 97%. The composite material exhibited a good loss factor, a good bending strength at 90°, a good bending modulus at 0°, and a good bending strength at 0° which were 174%, 98%, 96%, and 100%, respectively, compared with the comparative example 16. The composite material also exhibited a good Tg.

(Comparative Example 18)

A unidirectional prepreg precursor and a fiber reinforced composite material were produced in the same manner as in the comparative example 11, except that the resin composition in the reference example 18 was used as the constituent element (B). The composite material exhibited a low loss factor, which was undesirable.

(Example 21)

A unidirectional prepreg was produced in the same manner as in the example 1, except that the resin composition in the reference example 18 was used as the constituent element (B). The unidirectional prepreg exhibited a good degree of surface localization of 99%. Next, a fiber reinforced composite material was produced in the same manner as in the example 1. The composite material exhibited a good degree of interlayer localization of 96%. The composite material exhibited a good loss factor, a good bending strength at 90°, a good bending modulus at 0°, and a good bending strength at 0° which were 183%, 99%, 100%, and 101%, respectively, compared with the comparative example 18. The composite material also exhibited a good Tg. Inclusion of the carbon particles in the epoxy resin as the constituent element (B) led to an improved modulus and an improved strength compared with the example 18.

(Comparative Example 19)

A unidirectional prepreg precursor and a fiber reinforced composite material were produced in the same manner as in the comparative example 11, except that the resin composition in the reference example 19 was used as the constituent element (B). The composite material exhibited a low loss factor, which was undesirable.

(Example 22)

A unidirectional prepreg was produced in the same manner as in the example 1, except that the resin composition in the reference example 19 was used as the constituent element (B). The unidirectional prepreg exhibited a good degree of surface localization of 99%. Next, a fiber reinforced composite material was produced in the same manner as in the example 1. The composite material exhibited a good degree of interlayer localization of 96%. The composite material exhibited a good loss factor, a good bending strength at 90°, a good bending modulus at 0°, and a good bending strength at 0° which were 176%, 98%, 100%, and 101 %, respectively, compared with the comparative example 19. The composite material also exhibited a good Tg. Inclusion of the metal plated polymer particles in the epoxy resin as the constituent element (B) led to an improved modulus and an improved strength compared with the example 19.

(Comparative Example 17)

A unidirectional prepreg precursor and a fiber reinforced composite material were produced in the same manner as in the comparative example 1, except that the resin composition in the reference example 17 was used as the constituent element (B). The composite material exhibited a low loss factor, which was undesirable.

(Example 23)

The resin composition in the reference example 17 and the material (A-1) were kneaded in the same manner as in the reference example 51 to provide a resin composition. The resin composition and the epoxy resin composition in the reference example 1 were individually applied onto a release paper using a reverse coater to produce a resin film. Next, the resin film produced from the composition in the reference example 1 was used to produce, in the same manner as in the comparative example 1, a unidirectional prepreg precursor having a mass of the reinforcing fibers per unit area of 125 g/m$^2$ and a fiber content of 76% by mass. The resin films produced from the resin composition in the reference example 17 and the material (A-1) were uniformly applied onto one surface of the unidirectional prepreg precursor, by pressing using heated press rolls to provide a unidirectional prepreg. The unidirectional prepreg exhibited a good degree of surface localization of 99%. The unidirectional prepreg was used to produce a fiber reinforced composite material in the same manner as in Example 1. The composite material exhibited a good degree of interlayer localization of 96%. The composite material exhibited a good loss factor, a good bending strength at 90°, a good bending modulus at 0°, and a good bending strength at 0° which were 176% and 98%, respectively, compared with the Comparative Example 1 and 176%, 98%, 98%, and 100%, respectively, compared with the Comparative Example 17. The composite material also exhibited a good Tg.

(Example 24)

The epoxy resin composition in the reference example 17 and the material (A-1) were kneaded in the same manner as in the reference example 51 to produce a resin composition. The resin composition and the epoxy resin composition in the reference example 17 were individually applied onto a release paper using a reverse coater to produce a resin film. Next, the resin film produced from the composition in the reference example 17 was used to produce, in the same manner as in the comparative example 1, a unidirectional prepreg precursor having a mass of the reinforcing fibers per unit area of 125 g/m$^2$ and a fiber content of 76% by mass. The resin film produced from the resin composition in the reference example 17 and the material (A-1) were uniformly applied onto one surface of the unidirectional prepreg precursor by pressing using heated press rolls to provide a unidirectional prepreg. The unidirectional prepreg exhibited a good degree of surface localization of 98%. The unidirectional prepreg was used to produce a fiber reinforced composite material in the same manner as in the example 1. The composite material exhibited a good degree of interlayer localization of 95%. The composite material exhibited a good loss factor, a good bending strength at 90°, a good bending modulus at 0°, and a good bending strength at 0° which were 178%, 98%, 102%, and 99%, respectively, compared with the comparative example 17. The composite material also exhibited a good Tg.

(Example 25)

The epoxy resin composition in the reference example 18 and the material (A-1) were kneaded in the same manner as in the reference example 51 to produce a resin composition. The resultant resin composition and the epoxy resin composition in the reference example 14 were individually applied onto a release paper using a reverse coater to produce a resin film. Next, the resin film produced from the resin composition in the reference example 14 was used to produce, in the same manner as in the comparative example 1, a unidirectional prepreg precursor having a mass of the reinforcing fibers per unit area of 125 g/m$^2$ and a fiber content of 76% by mass. The resin film produced from the resin composition in the reference example 18 and the material (A-1) was uniformly applied onto one surface of the unidirectional prepreg precursor by pressing using heated press rolls to provide a unidirectional prepreg. The unidirectional prepreg exhibited a good degree of surface localization of 99%. The unidirectional prepreg was used to produce a fiber reinforced composite material in the same manner as in the example 1. The composite material exhibited a good degree of interlayer localization of 97%. The composite material exhibited a good loss factor, a good bending strength at 90°, a good bending modulus at 0°, and a good bending strength at 0° which were 185%, 99%, 101%, and 101%, respectively, compared with the comparative example 18. The composite material also exhibited a good Tg.

(Example 26)

The material (A-1) as the constituent element (A) was uniformly applied onto both surfaces of the unidirectional prepreg precursor obtained in the comparative example 1, sandwiched between release papers, and passed through heated press rolls to produce a unidirectional prepreg. The unidirectional prepreg exhibited a good degree of surface localization of 99%. 18 layers of the unidirectional prepregs were laminated. A fiber reinforced composite material was produced in the same manner as in the comparative example 1, except that the unidirectional prepreg precursors obtained in the comparative example 1 were laminated by layer by layer onto both surfaces of the laminate. The composite material exhibited a good degree of interlayer localization of 96%. The composite material exhibited a good loss factor, a good bending strength at 90°, a good bending modulus at 0°, and a good bending strength at 0° which were 170%, 99%, 100%, and 101%, respectively, compared with the comparative example 1. The composite material also exhibited a good Tg.

(Comparative Example 20)

A unidirectional prepreg precursor and a fiber reinforced composite material were produced in the same manner as in the comparative example 1, except that the resin composition in the reference example 21 was used as the constituent element (B). The composite material exhibited a low loss factor, which was undesirable.

(Example 27)

A unidirectional prepreg was produced in the same manner as in the example 1, except that the resin composition in the reference example 21 was used as the constituent element (B). The unidirectional prepreg exhibited a good degree of surface localization of 99%. Next, a fiber reinforced composite material was produced in the same manner as in the example 1. The composite material exhibited a good degree of interlayer localization of 96%. The composite material exhibited a good loss factor, a good bending strength at 90°, a good bending modulus at 0°, and a good bending strength at 0° which were 188%, 98%, 103%, and 100%, respectively, compared with the comparative example 20. The composite material also exhibited a good Tg. Inclusion of the Bisphenol A type epoxy resin having an epoxy equivalent of 810 in the epoxy resin as the constituent element (B) led to an improved loss factor compared with the example 1.

(Comparative Example 21)

A unidirectional prepreg precursor and a fiber reinforced composite material were produced in the same manner as in the comparative example 1, except that the resin composition in the reference example 22 was used as the constituent element (B). The composite material exhibited a low loss factor, which was undesirable.

(Example 28)

A unidirectional prepreg was produced in the same manner as in the example 1, except that the resin composition in the reference example 22 was used as the constituent element (B). The unidirectional prepreg exhibited a good degree of surface localization of 98%. Next, a fiber reinforced composite material was produced in the same manner as in the example 1. The composite material exhibited a good degree of interlayer localization of 97%. The composite material exhibited a good loss factor, a good bending strength at 90°, a good bending modulus at 0°, and a good bending strength at 0° which were 188%, 98%, 93%, and 101%, respectively, compared with the comparative example 21. The composite material also exhibited a good Tg. Inclusion of the Bisphenol A type epoxy resin having an epoxy equivalent of 1930 in the epoxy resin as the constituent element (B) led to an improved loss factor compared with the example 1.

(Comparative Example 22)

A unidirectional prepreg precursor and a fiber reinforced composite material were produced in the same manner as in the comparative example 1, except that the resin composition in the reference example 23 was used as the constituent element (B). The composite material exhibited a low loss factor, which was undesirable.

(Example 29)

A unidirectional prepreg was produced in the same manner as in the example 1, except that the resin composition in the reference example 23 was used as the constituent element (B). The unidirectional prepreg exhibited a good degree of surface localization of 98%. Next, a fiber reinforced composite material was produced in the same manner as in the example 1. The composite material exhibited a good degree of interlayer localization of 95%. The composite material exhibited a good loss factor, a good bending strength at 90°, a good bending modulus at 0°, and a good bending strength at 0° which were 192%, 99%, 100%, and 100%, respectively, compared with the comparative example 22. The composite material also exhibited a good Tg. Inclusion of the Bisphenol A type epoxy resin having an epoxy equivalent of 4000 in the epoxy resin as the constituent element (B) led to an improved loss factor compared with the example 1.

(Comparative Example 23)

A unidirectional prepreg precursor and a fiber reinforced composite material were produced in the same manner as in the comparative example 1, except that the resin composition in the reference example 24 was used as the constituent element (B). The composite material exhibited a low loss factor, which was undesirable.

(Example 30)

A unidirectional prepreg was produced in the same manner as in the example 1, except that the resin composition in the reference example 24 was used as the constituent element (B). The unidirectional prepreg exhibited a good degree of surface localization of 97%. Next, a fiber reinforced composite material was produced in the same manner as in the example 1. The composite material exhibited a good degree of interlayer localization of 98%. The composite material exhibited a good loss factor, a good bending strength at 90°, a good bending modulus at 0°, and a good bending strength at 0° which were 190%, 98%, 103%, and 100%, respectively, compared with the comparative example 23. The composite material also exhibited a good Tg. Inclusion of the bisphenol F type epoxy resin in the epoxy resin as the constituent element (B) led to an improved strength compared with the example 1.

(Comparative Example 24)

A unidirectional prepreg precursor and a fiber reinforced composite material were produced in the same manner as in the comparative example 1, except that the resin composition in the reference example 25 was used as the constituent element (B). The composite material exhibited a low loss factor, which was undesirable.

(Example 31)

A unidirectional prepreg was produced in the same manner as in the example 1, except that the resin composition in the reference example 25 was used as the constituent element (B). The unidirectional prepreg exhibited a good degree of surface localization of 99%. Next, a fiber reinforced composite material was produced in the same manner as in the example 1. The composite material exhibited a good degree of interlayer localization of 97%. The composite material exhibited a good loss factor, a good bending strength at 90°, a good bending modulus at 0°, and a good bending strength at 0° which were 186%, 98%, 96%, and 99%, respectively, compared with the comparative example 24. The composite material also exhibited a good Tg. Inclusion of the bisphenol F type epoxy resin having an epoxy equivalent of 800 in the epoxy resin as the constituent element (B) led to an improved loss factor compared with the example 30.

(Comparative Example 25)

A unidirectional prepreg precursor and a fiber reinforced composite material were produced in the same manner as in the comparative example 1, except that the resin composition in the reference example 26 was used as the constituent element (B). The composite material exhibited a low loss factor, which was undesirable.

(Example 32)

A unidirectional prepreg was produced in the same manner as in the example 1, except that the resin composition in the reference example 26 was used as the constituent element (B). The unidirectional prepreg exhibited a good degree of surface localization of 99%. Next, a fiber reinforced composite material was produced in the same manner as in the example 1. The composite material exhibited a good degree of interlayer localization of 97%. The composite material exhibited a good loss factor, a good bending strength at 90°, a good bending modulus at 0°, and a good bending strength at 0° which were 192%, 98%, 96%, and 100%, respectively, compared with the comparative example 25. The composite material also exhibited a good Tg. Inclusion of the bisphenol F type epoxy resin having an epoxy equivalent of 2270 in the epoxy resin as the constituent element (B) led to an improved loss factor compared with the example 30.

(Comparative Example 26)

A unidirectional prepreg precursor and a fiber reinforced composite material were produced in the same manner as in the comparative example 1, except that the resin composition in the reference example 27 was used as the constituent element (B). The composite material exhibited a low loss factor, which was undesirable.

(Example 33)

A unidirectional prepreg was produced in the same manner as in the example 1, except that the resin composition in the reference example 27 was used as the constituent element (B). The unidirectional prepreg exhibited a good degree of surface localization of 98%. Next, a fiber reinforced composite material was produced in the same manner as in the example 1. The composite material exhibited a good degree of interlayer localization of 97%. The composite material exhibited a good loss factor, a good bending strength at 90°, a good bending modulus at 0°, and a good bending strength at 0° which were 190%, 100%, 97%, and 100%, respectively, compared with the comparative example 26. The composite material also exhibited a good Tg. Inclusion of the bisphenol F type epoxy resin having an epoxy equivalent of 4400 in the epoxy resin as the constituent element (B) led to an improved loss factor compared with the example 30.

(Comparative Example 27)

The material (A-9) as the constituent element (A) was applied onto one surface of the unidirectional prepreg precursor obtained in the comparative example 1, sandwiched between release papers, and passed through heated press rolls to provide a unidirectional prepreg. The unidirectional prepreg exhibited a good degree of surface localization of 100%. The unidirectional prepreg was used to produce a fiber reinforced composite material in the same manner as in the example 1. The composite material exhibited a good degree of interlayer localization of 100%. The composite material also exhibited a good loss factor which were 580% compared with the comparative example 1, although the material exhibited a low bending strength of 82%. And the higher Tg of the material was reduced, because part of the constituent element (A) was dissolved in the constituent element (B).

(Comparative Example 28)

A unidirectional prepreg precursor and a fiber reinforced composite material were produced in the same manner as in the example 1, except that the material (A-4) was used as the constituent element (A). The degree of surface localization could not be measured, because the material (A-4) was dissolved in the composition in the reference example 1. The unidirectional prepreg was used to produce a fiber reinforced composite material in the same manner as in the example 1. The degree of interlayer localization could not be measured. The composite material exhibited a loss factor of 112% and a bending strength of 85% compared with the comparative example 1, which were undesirable. The composite material also exhibited an undesirable Tg.

(Comparative Example 29)

A unidirectional prepreg precursor and a fiber reinforced composite material were produced in the same manner as in the example 1, except that the material (A-5) was used as the constituent element (A). The unidirectional prepreg exhibited a good degree of surface localization of 97%. The unidirectional prepreg was used to produce a fiber reinforced composite material in the same manner as in the example 1. The composite material exhibited a good degree of interlayer localization of 95%. The composite material exhibited a good bending strength which was 99% compared with the comparative example 1, although the material exhibited a low loss factor which was 110%. The composite material exhibited a good Tg.

(Comparative Example 30)

A unidirectional prepreg precursor and a fiber reinforced composite material were produced in the same manner as in the example 1, except that the material (A-6) was used as the constituent element (A). The unidirectional prepreg exhibited an insufficient degree of surface localization of 88%. The unidirectional prepreg was used to produce a fiber reinforced composite material in the same manner as in the example 1. The composite material exhibited an insufficient degree of interlayer localization of 83%. The composite material also exhibited an insufficient loss factor and an insufficient bending strength compared with the example 1.

(Comparative Example 31)

A unidirectional prepreg precursor and a fiber reinforced composite material were produced in the same manner as in the example 1, except that the material (A-7) was used as the constituent element (A). The unidirectional prepreg exhibited a good degree of surface localization of 100%. The unidirectional prepreg was used to produce a fiber reinforced composite material in the same manner as in the example 1. The composite material exhibited a good degree of interlayer localization of 99%, and a good loss factor which was 142% compared with the comparative example 1. The composite material exhibited, however, an undesirable bending strength which was 88% compared with the comparative example 1.

(Comparative Example 32)

A unidirectional prepreg precursor and a fiber reinforced composite material were produced in the same manner as in the example 1, except that the material (A-8) was used as the constituent element (A). The unidirectional prepreg exhibited a good degree of surface localization of 93%. The unidirectional prepreg was used to produce a fiber reinforced composite material in the same manner as in the example 1. The composite material exhibited a good degree of interlayer localization of 91 %. The composite material exhibited a good bending strength which was 100% compared with the comparative example 1, although the material exhibited a low loss factor of 104%. The composite material exhibited a good Tg.

(Comparative Example 33)

A unidirectional prepreg precursor and a fiber reinforced composite material were produced in the same manner as in the comparative example 1, except that the material (C-3) was used the constituent element (C). The composite material exhibited a low loss factor, which was undesirable.

(Example 34)

A unidirectional prepreg was produced in the same manner as in the example 1, except that the material (C-3) was used the constituent element (C). The unidirectional prepreg exhibited a good degree of surface localization of 98%. Next, a fiber reinforced composite material was produced in the same manner as in the example 1. The composite material exhibited a good degree of interlayer localization of 98%. The composite material exhibited a good loss factor, a good bending strength at 90°, a good bending modulus at 0°, and a good bending strength at 0° which were 142%, 98%, 99%, and 100%, respectively, compared with the comparative example 33. The composite material also exhibited a good Tg. Use of the material (C-3) as the constituent element (C) led to a good balance of loss factor, modulus, and strength, as in the example 1.

(Comparative Example 34)

A unidirectional prepreg precursor and a fiber reinforced composite material were produced in the same manner as in the comparative example 1, except that the material (C-4) was used as the constituent element (C). The composite material exhibited a low loss factor, which was undesirable.

(Example 35)

A unidirectional prepreg was produced in the same manner as in the example 1, except that the material (C-4) was used as the constituent element (C). The unidirectional prepreg exhibited a good degree of surface localization of 97%. Next, a fiber reinforced composite material was produced in the same manner as in the example 1. The composite material exhibited a good degree of interlayer localization of 98%. The composite material exhibited a good loss factor, a good bending strength at 90°, a good bending modulus at 0°, and a good bending strength at 0° which were 132%, 98%, 10.1%, and 101%, respectively, compared with the comparative example 34. The composite material also exhibited a good Tg.

(Comparative Example 35)

A unidirectional prepreg precursor and a fiber reinforced composite material were produced in the same manner as in the comparative example 1, except that the material (C-5) was used as the constituent element (C). The composite material exhibited a low loss factor, which was undesirable.

(Example 36)

A unidirectional prepreg was produced in the same manner as in the example 1, except that the material (C-5) was used as the constituent element (C). The unidirectional prepreg exhibited a good degree of surface localization of 98%. Next, a fiber reinforced composite material was produced in the same manner as in the example 1. The composite material exhibited a good degree of interlayer localization of 96%. The composite material exhibited a good loss factor, a good bending strength at 90°, a good bending modulus at 0°, and a good bending strength at 0° which were 138%, 97%, 100%, and 101%, respectively, compared with the comparative example 35. The composite material also exhibited a good Tg.

(Comparative Example 36)

A unidirectional prepreg precursor and a fiber reinforced composite material were produced in the same manner as in the comparative example 1, except that the material (C-6) was used as the constituent element (C). The composite material exhibited a low loss factor, which was undesirable.

(Example 37)

A unidirectional prepreg was produced in the same manner as in the example 1, except that the material (C-6) was used as the constituent element (C). The unidirectional prepreg exhibited a good degree of surface localization of 97%. Next, a fiber reinforced composite material was produced in the same manner as in the example 1. The composite material exhibited a good degree of interlayer localization of 97%. The composite material exhibited a good loss factor, a good bending strength at 90°, a good bending modulus at 0°, and a good bending strength at 0° which were 136%, 95%, 100%, and 101%, respectively, compared with the comparative example 36. The composite material also exhibited a good Tg.

(Comparative Example 37)

6 layers of the fabrics (C-2) was laminated in a plate cavity having a length of 300 mm, a width of 300 mm, and a thickness of 2 mm of a mold and was clamped with a pressing apparatus. Next, the pressure of the mold held at 100°C (molding temperature) was reduced to atmospheric pressure -0.1 MPa by a vacuum pump. The epoxy resin in the reference example 11 which had been preheated to 50°C was mixed with a mixture of the hardener and the curing catalyst and injected in the mold at a pressure of 0.2 MPa using a resin injector. After 30 minutes (curing time) of the beginning of the injection of the epoxy resin composition, the mold was opened, and the resultant precursor of a fiber reinforced composite material was removed from the mold. The resultant precursor of a fiber reinforced composite material was post-cured in a preheated oven at 130°C for an hour to produce a fiber reinforced composite material. The fiber reinforced composite material exhibited an insufficient loss factor.

(Example 38)

6 layers of the fabrics (C-2) was laminated in a plate cavity having a length of 300 mm, a width of 300 mm, and a thickness of 2 mm of a mold, with the material (A-1) applied between the fabric layers, and was clamped with a pressing apparatus. Next, the pressure of the mold held at 100°C (molding temperature) was reduced to atmospheric pressure -0.1 MPa by a vacuum pump. The epoxy resin in the reference example 11 which had been preheated to 50°C was mixed with a mixture of the hardener and the curing catalyst and injected in the mold at a pressure of 0.2 MPa using a resin injector. After 30 minutes (curing time) of the beginning of the injection of the epoxy resin composition, the mold was opened, and the resultant precursor of a fiber reinforced composite material was removed from the mold. The resultant precursor of a fiber reinforced composite material was post-cured in a preheated oven at 130°C for an hour to produce a fiber reinforced composite material. The resultant fiber reinforced composite material exhibited a good degree of interlayer localization of 95%. The composite material exhibited a good loss factor and a good bending strength which were 178% and 98%, respectively, compared with the comparative example 37. The composite material also exhibited a good Tg.

[Table 1]

| | | Unit | Constituent Element (A) | | | | | |
|---|---|---|---|---|---|---|---|---|
| | | | 1 | 2 | 3 | 4 | 5 | 8 |
| Epoxy Resin | DeAbsentcol EX830 | Part by Mass | 70 | 70 | 60 | 100 | - | 70 |
| | jER 1001 | | 30 | 30 | 40 | - | 50 | 30 |
| | jER 828 | | - | - | - | - | 50 | |
| Hardener | Dicy 7 | Equivalent | 1.0 | 1.0 | 1.0 | - | 1.0 | 1.0 |
| | Jeffamine M600 | | - | - | - | 1.0 | - | |
| Curing Catalyst | DCMU | Part by Mass | 4 | 4 | 4 | 4 | 4 | 4 |
| Tg | | °C | -10 | -10 | -2 | -67 | 118 | -10 |
| Tan θ at 10°C | | - | 1.08 | 1.08 | 0.22 | 0.18 | 0.05 | 1.08 |
| Average Particle Diameter | | μm | 15 | 7 | 13 | 17 | 15 | - |

[Table 2]

| | | | Unit | Reference Example | | | | | |
|---|---|---|---|---|---|---|---|---|---|
| | | | | 1 | 2 | 3 | 4 | 5 | 6 |
| Constituent Element (B) or (D) Third Epoxy Resin Fourth Epoxy Resin | Epoxy Resin | B-1 | Part by Mass | 50 | 50 | 50 | 50 | 20 | - |
| | | B-2 | | 50 | 50 | 50 | 50 | 30 | 50 |
| | | B-3 | | - | - | - | - | - | - |
| | | B-4 | | - | - | - | - | - | - |
| | | B-5 | | - | - | - | - | 50 | - |
| | | B-6 | | - | - | - | - | - | 50 |
| | | B-7 | | - | - | - | - | - | - |
| | | B-8 | | - | - | - | - | - | - |
| | | B-9 | | - | - | - | - | - | - |
| | | B-10 to B-15 | | - | - | - | - | - | - |
| | Hardener | B-16 | Equivalent | 1.2 | 1.0 | 1.0 | 0.8 | 1.2 | 1.2 |
| | | B-17 | | - | - | - | - | - | - |
| | | B-18 | | - | - | - | - | - | - |
| | Curing Catalyst | B-19 | Part by Mass | 4 | 3 | 4 | 4 | 4 | 4 |
| | | B-20 | | - | - | - | - | - | - |
| | Others | Polyvinyl Formal | Part by Mass | - | - | - | - | - | - |
| | | S-B-M Terpolymer | | - | - | - | - | - | - |
| | | Polyethersulfone | | - | - | - | - | - | - |
| Curing Conditions for Constituent Element (B) or (D), or Third or Fourth Epoxy Resin | | | - | 130°C × 90 min | 130°C × 90 min | 130°C × 90 min | 130°C × 90 min | 130°C × 90 min | 130°C × 90 min |
| Tg of Cured Constituent Element (B) or (D), or Constituent Element (F) or (H) | | | °C | 118 | 115 | 116 | 112 | 134 | 138 |
| Exotherm Peak of Cured Constituent Element (B) or (D), or Constituent Element (F) or (H) | | | - | Absent | Absent | Absent | Absent | Absent | Absent |

EP 2 703 432 A1

37

[Table 3]

| | | | Unit | Reference Example | | | | | |
|---|---|---|---|---|---|---|---|---|---|
| | | | | 7 | 8 | 9 | 10 | 11 | 12 |
| Constituent Element(B)or (D) Third Epoxy Resin Fourth Epoxy Resin | Epoxy Resin | B-1 | Part by Mass | 50 | - | - | 50 | - | 40 |
| | | B-2 | | - | 50 | 50 | - | 100 | 60 |
| | | B-3 | | - | - | - | - | - | - |
| | | B-4 | | - | - | - | - | - | - |
| | | B-5 | | - | - | - | - | - | - |
| | | B-6 | | - | - | - | - | - | - |
| | | B-7 | | 50 | - | - | 50 | - | - |
| | | B-8 | | - | 50 | - | - | - | - |
| | | B-9 | | - | - | 50 | - | - | - |
| | | B-10 to B-15 | | - | - | - | - | - | - |
| | Hardener | B-16 | Equivalent | 1.2 | 1.2 | 1.2 | - | - | 1.0 |
| | | B-17 | | - | - | - | 1.2 | - | - |
| | | B-18 | | - | - | - | - | 1.2 | - |
| | Curing Catalyst | B-19 | Part by Mass | 4 | 4 | 4 | - | - | 4 |
| | | B-20 | | - | - | - | - | 3 | - |
| | Others | Polyvinyl Formal | Part by Mass | - | - | - | - | - | 3 |
| | | S-B-M Terpolymer | | - | - | - | - | - | - |
| | | Polyethersulfone | | - | - | - | - | - | - |
| Curing Conditions for Constituent Element (B) or (D), or Third or Fourth Epoxy Resin | | | - | 130°C × 90 min | 130°C × 90 min | 130°C × 90 min | 180°C × 120 min | 130°C × 90 min | 130°C × 90 min |
| Tg of Cured Constituent Element (B) or (D), or Constituent Element (F) or (H) | | | °C | 170 | 143 | 133 | 196 | 145 | 115 |
| Exotherm Peak of Cured Constituent Element (B) or (D), or Constituent Element (F) or (H) | | | - | Absent | Absent | Absent | Absent | Absent | Absent |

[Table 4]

| | | | Unit | Reference Example | | | |
|---|---|---|---|---|---|---|---|
| | | | | 13 | 14 | 15 | 16 |
| Constituent Element (B) or (D) Third Epoxy Resin Fourth Epoxy Resin | Epoxy Resin | B-1 | Part by Mass | 40 | 50 | - | 30 |
| | | B-2 | | 30 | - | 30 | 70 |
| | | B-3 | | - | - | - | - |
| | | B-4 | | 30 | - | - | - |
| | | B-5 | | - | - | - | - |
| | | B-6 | | - | - | - | - |
| | | B-7 | | - | 50 | 70 | - |
| | | B-8 | | - | - | - | - |
| | | B-9 | | - | - | - | - |
| | | B-10 to B-15 | | - | - | - | - |
| | Hardener | B-16 | Equivalent | 1.0 | - | - | 1.2 |
| | | B-17 | | - | 1.2 | 1.2 | - |
| | | B-18 | | - | - | - | - |
| | Curing Catalyst | B-19 | Part by Mass | 4 | - | - | 4 |
| | | B-20 | | - | - | - | - |
| | Others | Polyvinyl Formal | Part by Mass | - | - | - | 2 |
| | | S-B-M Terpolymer | | 3 | - | - | - |
| | | Polyethersulfone | | - | 3 | - | - |
| Constituent Element (P) or (Q) | | P-1 | | - | - | - | - |
| | | P-2 | | | | - | |
| Curing Conditions for Constituent Element (B) or (D), or Third or Fourth Epoxy Resin | | | - | 130°C × 90 min | 180°C × 120 min | 180°C × 120 min | 130°C × 90 min |
| Tg of Cured Constituent Element (B) or (D), or Constituent Element (F) or (H) | | | °C | 105 | 197 | 210 | 118 |
| Exotherm Peak of Cured Constituent Element (B) or (D), or Constituent Element (F) or (H) | | | - | Absent | Absent | Absent | Absent |

[Table 5]

| | | | Unit | Reference Example | | | |
|---|---|---|---|---|---|---|---|
| | | | | 17 | 18 | 19 | 20 |
| Constituent Element (B) or (D) Third Epoxy Resin Fourth Epoxy Resin | Epoxy Resin | B-1 | Part by Mass | 30 | 50 | - | - |
| | | B-2 | | 70 | - | 30 | - |
| | | B-3 | | - | - | - | 65 |
| | | B-4 | | - | - | - | 35 |
| | | B-5 | | - | - | - | - |
| | | B-6 | | - | - | - | - |
| | | B-7 | | - | 50 | 70 | - |
| | | B-8 | | - | - | - | - |
| | | B-9 | | - | - | - | - |
| | | B-10 to B-15 | | - | - | - | - |
| | Hardener | B-16 | Equivalent | 1.2 | - | - | 1.2 |
| | | B-17 | | - | 1.2 | 1.2 | - |
| | | B-18 | | - | - | - | - |
| | Curing Catalyst | B-19 | Part by Mass | 4 | - | - | 4 |
| | | B-20 | | - | - | - | - |
| | Others | Polyvinyl Formal | Part by Mass | 5 | - | - | - |
| | | S-B-M Terpolymer | | - | - | - | - |
| | | Polyethersulfone | | - | - | - | - |
| Constituent Element (P) or (Q) | | P-1 | | - | 1 | - | - |
| | | P-2 | | | | 1 | |
| Curing Conditions for Constituent Element (B) or (D), or Third or Fourth Epoxy Resin | | | - | 130°C × 90 min | 180°C × 120 min | 180°C × 120 min | 130°C × 90 min |
| Tg of Cured Constituent Element (B) or (D), or Constituent Element (F) or (H) | | | °C | 116 | 198 | 210 | 93 |
| Exotherm Peak of Cured Constituent Element (B) or (D), or Constituent Element (F) or (H) | | | - | Absent | Absent | Absent | Absent |

[Table 6]

| | | | Unit | Reference Example | | | |
|---|---|---|---|---|---|---|---|
| | | | | 21 | 22 | 23 | 24 |
| Constituent Element (B) or (D) Third Epoxy Resin Fourth Epoxy Resin | Epoxy Resin | B-1 | Part by Mass | - | - | - | 50 |
| | | B-2 | | 55 | 60 | 65 | 20 |
| | | B-3 | | - | - | - | 30 |
| | | B-4 to B-9 | | - | - | - | - |
| | | B-10 | | 45 | - | - | - |
| | | B-11 | | - | 40 | - | - |
| | | B-12 | | - | - | 35 | - |
| | | B-13 | | - | - | - | - |
| | | B-14 | | - | - | - | - |
| | | B-15 | | - | - | - | - |
| | Hardener | B-16 | Equivalent | 1.2 | 1.2 | 1.2 | 1.2 |
| | | B-17 | | - | - | - | - |
| | | B-18 | | - | - | - | - |
| | Curing Catalyst | B-19 | Part by Mass | 4 | 4 | 4 | 4 |
| | | B-20 | | - | - | - | - |
| | Others | Polyvinyl Formal | Part by Mass | - | - | - | - |
| | | S-B-M Terpolymer | | - | - | - | - |
| | | Polyethersulfone | | - | - | - | - |
| Constituent Element (P) or (Q) | | P-1 | | - | - | - | - |
| | | P-2 | | - | - | - | - |
| Curing Conditions for Constituent Element (B) or (D), or Third or Fourth Epoxy Resin | | | - | 130°C × 90 min | 130°C × 90 min | 130°C × 90 min | 130°C × 90 min |
| Tg of Cured Constituent Element (B) or (D), or Constituent Element (F) or (H) | | | °C | 116 | 115 | 115 | 104 |
| Exotherm Peak of Cured Constituent Element (B) or (D), or Constituent Element (F) or (H) | | | - | Absent | Absent | Absent | Absent |

[Table 7]

| | | | Unit | Reference Example | | |
|---|---|---|---|---|---|---|
| | | | | 25 | 26 | 27 |
| Constituent Element (B) or (D) Third Epoxy Resin Fourth Epoxy Resin | Epoxy Resin | B-1 | Part by Mass | 45 | 40 | 35 |
| | | B-2 | | 25 | 30 | 35 |
| | | B-3 | | - | - | - |
| | | B-4 to B-9 | | - | - | - |
| | | B-10 | | - | - | - |
| | | B-1 | | - | - | - |
| | | B-12 | | - | - | - |
| | | B-13 | | 30 | - | - |
| | | B-14 | | - | 30 | - |
| | | B-15 | | - | - | 30 |
| | Hardener | B-16 | Equivalent | 1.2 | 1.2 | 1.2 |
| | | B-17 | | - | - | - |
| | | B-18 | | - | - | - |
| | Curing Catalyst | B-19 | Part by Mass | 4 | 4 | 4 |
| | | B-20 | | - | - | - |
| | Others | Polyvinyl Formal | Part by Mass | - | - | - |
| | | S-B-M Terpolymer | | - | - | - |
| | | Polyethersulfone | | - | - | - |
| Constituent Element (P) or (Q) | | P-1 | | - | - | - |
| | | P-2 | | | | |
| Curing Conditions for Constituent Element (B) or (D), or Third or Fourth Epoxy Resin | | | - | 130°C × 90 min | 130°C × 90 min | 130°C × 90 min |
| Tg of Cured Constituent Element (B) or (D), or Constituent Element (F) or (H) | | | °C | 103 | 103 | 102 |
| Exotherm Peak of Cured Constituent Element (B) or (D), or Constituent Element (F) or (H) | | | - | Absent | Absent | Absent |

[Table 8]

| Resin Composition | | | | | Reference Example | | | | | | | |
|---|---|---|---|---|---|---|---|---|---|---|---|---|
| | | | | | 28 | 29 | 30 | 31 | 32 | 33 | 34 | 35 |
| | Constituent Element (A) or (E) | A-1 | | | 15 | - | - | - | - | - | - | - |
| | | A-2 | | | - | 15 | - | - | - | - | - | - |
| | | A-3 | | | - | - | - | - | - | 15 | - | - |
| | | A-4 | | | - | - | - | 15 | - | - | - | - |
| | | A-5 | | | - | - | 15 | - | - | - | - | - |
| | | A-6 | | | - | - | - | - | 15 | - | - | - |
| | | A-7 | | | - | - | - | - | - | - | 15 | - |
| | | A-8 | | | - | - | - | - | - | - | - | 15 |
| | Constituent Element (B) or (D) Third Epoxy Resin Fourth Epoxy Resin | Reference Example 1 | % by Mass | | 85 | - | 85 | 85 | 85 | 85 | 85 | 85 |
| | | Reference Example 2 | | | - | 85 | - | - | - | - | - | - |
| | | Reference Example 3 | | | - | - | - | - | - | - | - | - |
| | | Reference Example 4 | | | - | - | - | - | - | - | - | - |
| | | Reference Example 5 | | | - | - | - | - | - | - | - | - |
| | | Reference Example 6 | | | - | - | - | - | - | - | - | - |
| | | Reference Example 7 | | | - | - | - | - | - | - | - | - |
| | | Reference Example 8 | | | - | - | - | - | - | - | - | - |
| | | Reference Example 9 | | | - | - | - | - | - | - | - | - |
| Tg of Resin Composition | | | °C | | -9117 | -10,116 | 116 | 95 | -3,117 | -3,118 | -3,116 | 40,118 |

[Table 9]

| Resin Composition | | | | Reference Example | | | | | | | | |
|---|---|---|---|---|---|---|---|---|---|---|---|---|
| | | | | 36 | 37 | 38 | 39 | 40 | 41 | 42 | 43 |
| | Constituent Element (A) or (E) | A-1 | | 15 | 15 | 15 | 15 | 15 | 15 | 15 | 15 |
| | | A-2 | | - | - | - | - | - | - | - | - |
| | | A-3 | | - | - | - | - | - | - | - | - |
| | | A-4 | | - | - | - | - | - | - | - | - |
| | | A-5 | | - | - | - | - | - | - | - | - |
| | | A-6 | | - | - | - | - | - | - | - | - |
| | | A-7 | | - | - | - | - | - | - | - | - |
| | | A-8 | | - | - | - | - | - | - | - | - |
| | Constituent Element (B) or (D) Third Epoxy Resin Fourth Epoxy Resin | Reference Example 1 | % by Mass | - | - | - | - | - | - | - | - |
| | | Reference Example 2 | | - | - | 85 | - | - | - | - | - |
| | | Reference Example 3 | | 85 | - | - | - | - | - | - | - |
| | | Reference Example 4 | | - | 85 | - | - | - | - | - | - |
| | | Reference Example 5 | | - | - | - | 85 | - | - | - | - |
| | | Reference Example 6 | | - | - | - | - | 85 | - | - | - |
| | | Reference Example 7 | | - | - | - | - | - | 85 | - | - |
| | | Reference Example 8 | | - | - | - | - | - | - | 85 | - |
| | | Reference Example 9 | | - | - | - | - | - | - | - | 85 |
| | | Reference Examples 10-27 | | - | - | - | - | - | - | - | - |
| Tg of Resin Composition | | | °C | -10,116 | -10,112 | -10,115 | -9,133 | -10,136 | -10,170 | -9,140 | -9,132 |

[Table 10]

| Resin Composition | | | | Reference Example | | | | | | | | |
|---|---|---|---|---|---|---|---|---|---|---|---|---|
| | | | | 44 | 45 | 46 | 47 | 48 | 49 | 50 | 51 | 52 |
| | Constituent Element (A) or (E) | A-1 | % by Mass | 15 | 15 | 15 | 15 | 15 | 15 | 15 | 15 | 15 |
| | | A-2 | | - | - | - | - | - | - | - | - | - |
| | | A-3 | | - | - | - | - | - | - | - | - | - |
| | | A-4 | | - | - | - | - | - | - | - | - | - |
| | | A-5 | | - | - | - | - | - | - | - | - | - |
| | | A-6 | | - | - | - | - | - | - | - | - | - |
| | | A-7 | | - | - | - | - | - | - | - | - | - |
| | | A-8 | | - | - | - | - | - | - | - | - | - |
| | Constituent Element (B) or (D) Third Epoxy Resin Fourth Epoxy Resin | Reference Examples 1-9 | | - | - | - | - | - | - | - | - | - |
| | | Reference Example 10 | | 85 | - | - | - | - | - | - | - | - |
| | | Reference Example 11 | | - | 85 | - | - | - | - | - | - | - |
| | | Reference Example 12 | | - | - | 85 | - | - | - | - | - | - |
| | | Reference Example 13 | | - | - | - | 85 | - | - | - | - | - |
| | | Reference Example 14 | | - | - | - | - | 85 | - | - | - | - |

(continued)

| | | 44 | 45 | 46 | 47 | 48 | 49 | 50 | 51 | 52 |
|---|---|---|---|---|---|---|---|---|---|---|
| | | | | | | | Reference Example | | | |
| | Reference Example 15 | - | - | - | - | - | 85 | - | - | - |
| | Reference Example 16 | - | - | - | - | - | - | 85 | - | - |
| | Reference Example 17 | - | - | - | - | - | - | - | 85 | - |
| | Reference Example 18 | - | - | - | - | - | - | - | - | 85 |
| | Reference Examples 19-27 | - | - | - | - | - | - | - | - | - |
| Tg of Resin Composition | °C | -9,195 | -8,146 | -10,115 | -10,105 | -11,195 | -10,209 | -9,118 | -9,115 | -11,196 |

[Table 11]

| | | | | % by Mass | Reference Example | | | | | | | | |
|---|---|---|---|---|---|---|---|---|---|---|---|---|---|
| | | | | | 53 | 54 | 55 | 56 | 57 | 58 | 59 | 60 | 61 |
| Resin Composition | Constituent Element (A) or (E) | | A-1 | | 15 | 15 | 15 | 15 | 15 | 15 | 15 | 15 | 15 |
| | | | A-2 | | - | - | - | - | - | - | - | - | - |
| | | | A-3 | | - | - | - | - | - | - | - | - | - |
| | | | A-4 | | - | - | - | - | - | - | - | - | - |
| | | | A-5 | | - | - | - | - | - | - | - | - | - |
| | | | A-6 | | - | - | - | - | - | - | - | - | - |
| | | | A-7 | | - | - | - | - | - | - | - | - | - |
| | | | A-8 | | - | - | - | - | - | - | - | - | - |
| | Constituent Element (B) or (D) | | Reference Examples 1-18 | | - | - | - | - | - | - | - | - | - |
| | | | Reference Example 19 | | 85 | - | - | - | - | - | - | - | - |
| | | Third Epoxy Resin | Reference Example 20 | | - | 85 | - | - | - | - | - | - | - |
| | | | Reference Example 21 | | - | - | 85 | - | - | - | - | - | - |
| | | | Reference Example 22 | | - | - | - | 85 | - | - | - | - | - |
| | | Fourth Epoxy Resin | Reference Example 23 | | - | - | - | - | 85 | - | - | - | - |
| | | | Reference Example 24 | | - | - | - | - | - | 85 | - | - | - |

(continued)

| | | | | Reference Example | | | | | | | | |
|---|---|---|---|---|---|---|---|---|---|---|---|---|
| | | | | 53 | 54 | 55 | 56 | 57 | 58 | 59 | 60 | 61 |
| | | Reference Example 25 | | - | - | - | - | - | - | 85 | - | - |
| | | Reference Example 26 | | - | - | - | - | - | - | - | 85 | - |
| | | Reference Example 27 | | - | - | - | - | - | - | - | - | 85 |
| Tg of Resin Composition | | | °C | -11,210 | -8,94 | -8,116 | -8,114 | -9,114 | -9,105 | -9,103 | -8,104 | -10,101 |

[Table 12]

| | | | Example | | | | | |
|---|---|---|---|---|---|---|---|---|
| | | | 1 | 2 | 3 | 4 | 5 | 6 |
| Prepreg | Constituent Element (A) | Raw Material % by Mass | A-1<br>3 | A-2<br>3 | A-3<br>3 | A-1<br>7 | A-1<br>15 | A-1<br>3 |
| | Constituent Element (B) | | Reference Example 1<br>33 | Reference Example 2<br>33 | Reference Example 1<br>33 | Reference Example 2<br>30 | Reference Example 1<br>27 | Reference Example 3<br>33 |
| | Constituent Element (C) | | C-1<br>64 | C-1<br>64 | C-1<br>64 | C-1<br>63 | C-1<br>58 | C-1<br>64 |
| | Constituent Element (D) | | - | - | - | - | - | - |
| | Surface Containing (A) | - | One Surface | One Surface | One Surface | One Surface | One Surface | One Surface |
| | Degree of Surface Localization | % | 98 | 94 | 99 | 99 | 99 | 99 |

(continued)

| | | | Example | | | | | |
|---|---|---|---|---|---|---|---|---|
| | | | 1 | 2 | 3 | 4 | 5 | 6 |
| Fiber Reinforced Composite Material | Lamination Structure 1) | | (I) | (I) | (I) | (I) | (I) | (I) |
| | Degree of Interlayer Localization | % | 96 | 91 | 96 | 95 | 96 | 97 |
| | Loss Factor | - | 0.0098 | 0.0092 | 0.0075 | 0.0109 | 0.0130 | 0.0095 |
| | Bending Strength at 90° 2) | MPa | 120 | 117 | 119 | 119 | 115 | 122 |
| | Bending Modulus at 0° 2) | GPa | 122 | 117 | 121 | 120 | 116 | 119 |
| | Bending Strength at 0° 2) | MPa | 1508 | 1467 | 1501 | 1501 | 1480 | 1520 |
| | Tg | °C | -9,113 | -9,110 | -3,92 | -9,111 | -9,113 | -11,112 |
| 1) Lamination Structure (I) The constituent element (A) was disposed in each interlayer. (II) The constituent element (A) was disposed only in the central interlayer. 2) Value at a Vf of 60% | | | | | | | | |

[Table 13]

| | | | Example | | | | |
|---|---|---|---|---|---|---|---|
| | | | 7 | 8 | 9 | 10 | 11 |
| Prepreg | Constituent Element (A) | Raw Material % by Mass | A-1 3 | A-1 3 | A-1 3 | A-1 3 | A-1 3 |
| | Constituent Element (B) | | Reference Example 4 33 | Reference Example 2 33 | Reference Example 5 33 | Reference Example 20 33 | Reference Example 6 33 |
| | Constituent Element (C) | | C-1 64 | C-1 64 | C-1 64 | C-1 64 | C-1 64 |
| | Constituent Element (D) | | - | - | - | - | - |
| | Surface Containing (A) | - | One Surface | One Surface | One Surface | One Surface | One Surface |
| | Degree of Surface Localization | % | 99 | 99 | 98 | 98 | 98 |
| Fiber Reinforced Composite Material | Lamination Structure 1) | | (I) | (I) | (I) | (I) | (I) |
| | Degree of Interlayer Localization | % | 97 | 97 | 97 | 95 | 96 |
| | Loss Factor | - | 0.0090 | 0.0094 | 0.0097 | 0.0098 | 0.0089 |
| | Bending Strength at 90° 2) | MPa | 124 | 125 | 134 | 129 | 123 |
| | Bending Modulus at 0° 2) | GPa | 125 | 115 | 123 | 118 | 123 |
| | Bending Strength at 0° 2) | MPa | 1497 | 1530 | 1573 | 1592 | 1503 |
| | Tg | °C | -11,106 | -11,109 | -11,128 | -8,86 | -11,134 |

1) Lamination Structure
(I) The constituent element (A) was disposed in each interlayer.
(II) The constituent element (A) was disposed only in the central interlayer.
2) Value at a Vf of 60%

[Table 14]

| | | | Example | | | | | |
|---|---|---|---|---|---|---|---|---|
| | | | 12 | 13 | 14 | 15 | 16 | 17 |
| Prepreg | Constituent Element (A) | Raw Material % by Mass | A-1 3 | A-1 3 | A-1 3 | A-1 3 | A-1 3 | A-1 3 |
| | Constituent Element (B) | | Reference Example 7 33 | Reference Example 8 33 | Reference Example 9 33 | Reference Example 10 33 | Reference Example 12 33 | Reference Example 13 33 |
| | Constituent Element (C) | | C-1 64 | C-1 64 | C-1 64 | C-1 64 | C-1 64 | C-1 64 |
| | Constituent Element (D) | | - | - | - | - | - | - |
| | Surface Containing (A) | - | One Surface | One Surface | One Surface | One Surface | One Surface | One Surface |
| | Degree of Surface Localization | % | 99 | 99 | 99 | 98 | 99 | 99 |

(continued)

| | | | Example | | | | | |
|---|---|---|---|---|---|---|---|---|
| | | | 12 | 13 | 14 | 15 | 16 | 17 |
| Fiber Reinforced Composite Material | Lamination Structure 1) | | (I) | (I) | (I) | (I) | (I) | (I) |
| | Degree of Interlayer Localization | % | 97 | 95 | 96 | 95 | 95 | 96 |
| | Loss Factor | - | 0.0097 | 0.0092 | 0.0091 | 0.0097 | 0.0092 | 0.0092 |
| | Bending Strength at 90° 2) | MPa | 137 | 132 | 116 | 133 | 123 | 127 |
| | Bending Modulus at 0° 2) | GPa | 117 | 125 | 124 | 121 | 122 | 121 |
| | Bending Strength at 0° 2) | MPa | 1715 | 1572 | 1483 | 1615 | 1510 | 1539 |
| | Tg | °C | -11,162 | -12,138 | -11,128 | -10,191 | -10,108 | -10,99 |

1) Lamination Structure
(I) The constituent element (A) was disposed in each interlayer.
(II) The constituent element (A) was disposed only in the central interlayer.
2) Value at a Vf of 60%

[Table 15]

| | | | 18 | 19 | 20 | 21 | 22 |
|---|---|---|---|---|---|---|---|
| Prepreg | Constituent Element (A) | Raw Material % by Mass | A-1 3 | A-1 3 | A-1 3 | A-1 3 | A-1 3 |
| | Constituent Element (B) | | Reference Example 14 33 | Reference Example 15 33 | Reference Example 16 33 | Reference Example 18 33 | Reference Example 19 33 |
| | Constituent Element (C) | | C-1 64 | C-1 64 | C-1 64 | C-1 64 | C-1 64 |
| | Constituent Element (D) | | - | - | - | - | - |
| | Surface Containing (A) | - | One Surface | One Surface | One Surface | One Surface | One Surface |
| | Degree of Surface Localization | % | 99 | 99 | 98 | 99 | 99 |
| Fiber Reinforced Composite Material | Lamination Structure 1) | | (I) | (I) | (I) | (I) | (I) |
| | Degree of Interlayer Localization | % | 96 | 96 | 97 | 96 | 96 |
| | Loss Factor | - | 0.0099 | 0.0097 | 0.0092 | 0.0097 | 0.0095 |
| | Bending Strength at 90° 2) | MPa | 137 | 135 | 121 | 136 | 134 |
| | Bending Modulus at 0° 2) | GPa | 121 | 123 | 115 | 126 | 126 |
| | Bending Strength at 0° 2) | MPa | 1761 | 1779 | 1505 | 1803 | 1810 |
| | Tg | °C | -9,191 | -9,210 | -10,114 | -9,192 | -9,211 |

1) Lamination Structure
(I) The constituent element (A) was disposed in each interlayer.
(II) The constituent element (A) was disposed only in the central interlayer.
2) Value at a Vf of 60%

[Table 16]

| | | | 23 | 24 | 25 | 26 |
|---|---|---|---|---|---|---|
| Prepreg | Constituent Element (A) | Raw Material % by Mass | A-1 | A-1 | A-1 | A-1 |
| | | | 3 | 3 | 3 | 1.5×2 |
| | Constituent Element (B) | | Reference Example 1 | Reference Example 17 | Reference Example 14 | Reference Example 1 |
| | | | 21 | 21 | 21 | 33 |
| | Constituent Element (C) | | C-1 | C-1 | C-1 | C-1 |
| | | | 64 | 64 | 64 | 64 |
| | Constituent Element (D) | | Reference Example 17 12 | Reference Example 17 12 | Reference Example 18 12 | - |
| | Surface Containing (A) | - | One Surface | One Surface | One Surface | Both Surfaces |
| | Degree of Surface Localization | % | 99 | 98 | 99 | 99 |
| Fiber Reinforced Composite Material | Lamination Structure 1) | | (I) | (I) | (I) | (I) |
| | Degree of Interlayer Localization | % | 96 | 95 | 97 | 96 |
| | Loss Factor | - | 0.0092 | 0.0093 | 0.0098 | 0.0088 |
| | Bending Strength at 90° 2) | MPa | 120 | 122 | 136 | 123 |
| | Bending Modulus at 0° 2) | GPa | 118 | 123 | 126 | 121 |
| | Bending Strength at 0° 2) | MPa | 1512 | 1487 | 1808 | 1513 |
| | Tg | °C | -10,113 | -10,113 | -10,192 | -9,114 |

1) Lamination Structure
(I) The constituent element (A) was disposed in each interlayer.
(II) The constituent element (A) was disposed only in the central interlayer.
2) Value at a Vf of 60%

[Table 17]

| | | | Example | | | | | |
|---|---|---|---|---|---|---|---|---|
| | | | 27 | 28 | 29 | 30 | 31 | 32 |
| Prepreg | Constituent Element (A) | Raw Material % by Mass | A-1 3 | A-1 3 | A-1 3 | A-1 3 | A-1 3 | A-1 3 |
| | Constituent Element (B) | | Reference Example 21 33 | Reference Example 22 33 | Reference Example 23 33 | Reference Example 24 33 | Reference Example 25 33 | Reference Example 26 33 |
| | Constituent Element (C) | | C-1 64 | C-1 64 | C-1 64 | C-1 64 | C-1 64 | C-1 64 |
| | Constituent Element (D) | | - | - | - | - | - | - |
| | Surface Containing (A) | - | One Surface | One Surface | One Surface | One Surface | One Surface | One Surface |
| | Degree of Surface Localization | % | 99 | 98 | 98 | 97 | 99 | 99 |

(continued)

| | | | Example | | | | | |
|---|---|---|---|---|---|---|---|---|
| | | | 27 | 28 | 29 | 30 | 31 | 32 |
| Fiber Reinforced Composite Material | Lamination Structure 1) | | (I) | (I) | (I) | (I) | (I) | (I) |
| | Degree of Interlayer Localization | % | 96 | 97 | 95 | 98 | 97 | 97 |
| | Loss Factor | - | 0.0109 | 0.0109 | 0.0105 | 0.0097 | 0.0106 | 0.0111 |
| | Bending Strength at 90° 2) | MPa | 121 | 118 | 118 | 126 | 125 | 124 |
| | Bending Modulus at 0° 2) | GPa | 123 | 115 | 122 | 121 | 118 | 116 |
| | Bending Strength at 0° 2) | MPa | 1482 | 1495 | 1477 | 1557 | 1541 | 1542 |
| | Tg | °C | -9,115 | -8,114 | -8,114 | -8,104 | -10,104 | -9,104 |

1) Lamination Structure
(I) The constituent element (A) was disposed in each interlayer.
(II) The constituent element (A) was disposed only in the central interlayer.
2) Value at a Vf of 60%

EP 2 703 432 A1

[Table 18]

| | | | Example | | | | |
|---|---|---|---|---|---|---|---|
| | | | 33 | 34 | 35 | 36 | 37 |
| Prepreg | Constituent Element (A) | Raw Material % by Mass | A-1 3 | A-1 3 | A-1 3 | A-1 3 | A-1 3 |
| | Constituent Element (B) | | Reference Example 27 33 | Reference Example 1 33 | Reference Example 1 33 | Reference Example 1 33 | Reference Example 1 33 |
| | Constituent Element (C) | | C-1 64 | C-3 64 | C-4 64 | C-5 64 | C-6 64 |
| | Constituent Element (D) | | - | - | | - | - |
| | Surface Containing (A) | - | One Surface | One Surface | One Surface | One Surface | One Surface |
| | Degree of Surface Localization | % | 98 | 98 | 97 | 98 | 97 |
| Fiber Reinforced Composite Material | Lamination Structure 1) | | (I) | (I) | (I) | (I) | (I) |
| | Degree of Interlayer Localization | % | 97 | 98 | 98 | 96 | 97 |
| | Loss Factor | - | 0.0101 | 0.0126 | 0.0140 | 0.0164 | 0.0173 |
| | Bending Strength at 90° 2) | MPa | 127 | 124 | 105 | 95 | 89 |
| | Bending Modulus at 0° 2) | GPa | 119 | 151 | 188 | 222 | 237 |
| | Bending Strength at 0° 2) | MPa | 1543 | 1451 | 1312 | 1263 | 1161 |
| | Tg | °C | -8,102 | -8,112 | -10,113 | -9,114 | -8,113 |

1) Lamination Structure
(I) The constituent element (A) was disposed in each interlayer.
(II) The constituent element (A) was disposed only in the central interlayer.
2) Value at a Vf of 60%

[Table 19]

| | | | Comparative Example | | | | |
|---|---|---|---|---|---|---|---|
| | | | 1 | 2 | 3 | 4 | 5 |
| Prepreg | Constituent Element (A) | Raw Material % by Mass | - | - | - | - | - |
| | Constituent Element (B) | | Reference Example 1 32 | Reference Example 2 32 | Reference Example 3 32 | Reference Example 4 32 | Reference Example 5 32 |
| | Constituent Element (C) | | C-1 68 | C-1 68 | C-1 68 | C-1 68 | C-1 68 |
| | Constituent Element (D) | | - | - | - | - | - |
| | Surface Containing (A) | - | - | - | - | - | - |
| | Degree of Surface Localization | % | - | - | - | - | - |
| Fiber Reinforced Composite Material | Lamination Structure 1) | | - | - | - | - | - |
| | Degree of Interlayer Localization | % | - | - | - | - | - |
| | Loss Factor | - | 0.0052 | 0.0052 | 0.0053 | 0.0052 | 0.0054 |
| | Bending Strength at 90° 2) | MPa | 123 | 127 | 124 | 126 | 135 |
| | Bending Modulus at 0° 2) | GPa | 121 | 119 | 124 | 125 | 120 |
| | Bending Strength at 0° 2) | MPa | 1505 | 1521 | 1515 | 1492 | 1565 |
| | Tg | °C | 114 | 109 | 111 | 105 | 129 |

1) Lamination Structure
(I) The constituent element (A) was disposed in each interlayer.
(II) The constituent element (A) was disposed only in the central interlayer.
2) Value at a Vf of 60%

[Table 20]

| | | | Comparative Example | | | | |
|---|---|---|---|---|---|---|---|
| | | | 6 | 7 | 8 | 9 | 10 |
| Prepreg | Constituent Element (A) | Raw Material % by Mass | - | - | - | - | - |
| | Constituent Element (B) | | Reference Example 20 32 | Reference Example 6 32 | Reference Example 7 32 | Reference Example 8 32 | Reference Example 9 32 |
| | Constituent Element (C) | | C-1 68 | C-1 68 | C-1 68 | C-1 68 | C-1 68 |
| | Constituent Element (D) | | - | - | - | - | - |
| | Surface Containing (A) | - | - | - | - | - | - |
| | Degree of Surface Localization | % | - | - | - | - | - |
| Fiber Reinforced Composite Material | Lamination Structure 1) | | - | - | - | - | - |
| | Degree of Interlayer Localization | % | - | - | - | - | - |
| | Loss Factor | - | 0.0050 | 0.0052 | 0.0055 | 0.0053 | 0.005 |
| | Bending Strength at 90° 2) | MPa | 132 | 124 | 140 | 133 | 120 |
| | Bending Modulus at 0° 2) | GPa | 115 | 118 | 118 | 119 | 125 |
| | Bending Strength at 0° 2) | MPa | 1606 | 1511 | 1701 | 1584 | 1473 |
| | Tg | °C | 84 | 133 | 162 | 136 | 128 |

1) Lamination Structure
(I) The constituent element (A) was disposed in each interlayer.
(II) The constituent element (A) was disposed only in the central interlayer.
2) Value at a Vf of 60%

[Table 21]

| | | | Comparative Example | | | | |
|---|---|---|---|---|---|---|---|
| | | | 11 | 12 | 13 | 14 | 15 |
| Prepreg | Constituent Element (A) | Raw Material % by Mass | - | - | - | - | |
| | Constituent Element (B) | | Reference Example 10 32 | Reference Example 12 32 | Reference Example 13 32 | Reference Example 14 32 | Reference Example 15 32 |
| | Constituent Element (C) | | C-1 68 | C-1 68 | C-1 68 | C-1 68 | C-1 68 |
| | Constituent Element (D) | | - | - | - | - | - |
| | Surface Containing (A) | - | - | - | - | - | - |
| | Degree of Surface Localization | % | - | - | - | - | - |
| Fiber Reinforced Composite Material | Lamination Structure 1) | | - | - | - | - | - |
| | Degree of Interlayer Localization | % | - | - | - | - | - |
| | Loss Factor | - | 0.0054 | 0.0052 | 0.0052 | 0.0054 | 0.0054 |
| | Bending Strength at 90° 2) | MPa | 136 | 124 | 128 | 138 | 136 |
| | Bending Modulus at 0° 2) | GPa | 124 | 122 | 117 | 118 | 120 |
| | Bending Strength at 0° 2) | MPa | 1597 | 1508 | 1553 | 1790 | 1810 |
| | Tg | °C | 190 | 108 | 98 | 191 | 211 |

1) Lamination Structure
(I) The constituent element (A) was disposed in each interlayer.
(II) The constituent element (A) was disposed only in the central interlayer
2) Value at a Vf of 60%

[Table 22]

| | | | Comparative Example | | | | |
|---|---|---|---|---|---|---|---|
| | | | 16 | 17 | 18 | 19 | 20 |
| Prepreg | Constituent Element (A) | Raw Material % by Mass | - | - | - | - | - |
| | Constituent Element (B) | | Reference Example 16 32 | Reference Example 17 32 | Reference Example 18 32 | Reference Example 19 32 | Reference Example 21 32 |
| | Constituent Element (C) | | C-1 68 | C-1 68 | C-1 68 | C-1 68 | C-1 68 |
| | Constituent Element (D) | | - | - | - | - | - |
| | Surface Containing (A) | - | - | - | - | - | - |
| | Degree of Surface Localization | % | - | - | - | - | - |
| Fiber Reinforced Composite Material | Lamination Structure 1) | | - | - | - | - | - |
| | Degree of Interlayer Localization | % | - | - | - | - | - |
| | Loss Factor | - | 0.0053 | 0.0052 | 0.0053. | 0.0054 | 0.0058 |
| | Bending Strength at 90° 2) | MPa | 123 | 124 | 138 | 137 | 124 |
| | Bending Modulus at 0° 2) | GPa | 120 | 117 | 125 | 126 | 120 |
| | Bending Strength at 0° 2) | MPa | 1505 | 1496 | 1794 | 1800 | 1489 |
| | Tg | °C | 114 | 113 | 192 | 211 | 114 |

1) Lamination Structure
(I) The constituent element (A) was disposed in each interlayer.
(II) The constituent element (A) was disposed only in the central interlayer.
2) Value at a Vf of 60%

[Table 23]

| | | | Comparative Example | | | |
|---|---|---|---|---|---|---|
| | | | 21 | 22 | 23 | 24 |
| Prepreg | Constituent Element (A) | Raw Material % by Mass | - | - | - | - |
| | Constituent Element (B) | | Reference Example 22 32 | Reference Example 23 32 | Reference Example 24 32 | Reference Example 25 32 |
| | Constituent Element (C) | | C-1 68 | C-1 68 | C-1 68 | C-1 68 |
| | Constituent Element (D) | | - | - | - | - |
| | Surface Containing (A) | - | - | - | - | - |
| | Degree of Surface Localization | % | - | - | - | - |
| Fiber Reinforced Composite Material | Lamination Structure 1) | | - | - | - | - |
| | Degree of Interlayer Localization | % | - | - | - | - |
| | Loss Factor | - | 0.0057 | 0.0055 | 0.0051 | 0.0057 |
| | Bending Strength at 90° 2) | MPa | 121 | 120 | 129 | 128 |
| | Bending Modulus at 0° 2) | GPa | 123 | 122 | 117 | 123 |
| | Bending Strength at 0° 2) | MPa | 1486 | 1480 | 1556 | 1549 |
| | Tg | °C | 115 | 113 | 103 | 105 |

1) Lamination Structure
(I) The constituent element (A) was disposed in each interlayer.
(II) The constituent element (A) was disposed only in the central interlayer.
2) Value at a Vf of 60%

[Table 24]

| | | | Comparative Example | | | | | | | |
|---|---|---|---|---|---|---|---|---|---|---|
| | | | 25 | 26 | 27 | 28 | 29 | 30 | 31 | 32 |
| Prepreg | Constituent Element (A) | Raw Material % by Mass | - | - | A-9 15 | A-4 3 | A-5 3 | A-6 3 | A-7 3 | A-8 3 |
| | Constituent Element (B) | | Reference Example 26 32 | Reference Example 27 32 | Reference Example 1 27 | Reference Example 1 33 | Reference Example 1 33 | Reference Example 1 33 | Reference Example 1 33 | Reference Example 1 33 |
| | Constituent Element (C) | | C-1 68 | C-1 68 | C-1 58 | C-1 64 | C-1 64 | C-1 64 | C-1 64 | C-1 64 |
| | Constituent Element (D) | | - | - | - | - | - | - | - | - |
| | Surface Containing (A) | - | - | - | One Surface | One Surface | One Surface | One Surface | One Surface | One Surface |
| | Degree of Surface Localization | % | - | - | 100 | - | 97 | 88 | 100 | 93 |

(continued)

| | | | Comparative Example | | | | | | | |
|---|---|---|---|---|---|---|---|---|---|---|
| | | | 25 | 26 | 27 | 28 | 29 | 30 | 31 | 32 |
| Fiber Reinforced Composite Material | Lamination Structure 1) | | - | - | (I) | (I) | (I) | (I) | (I) | (I) |
| | Degree of Interlayer Localization | % | - | - | 100 | - | 95 | 83 | 99 | 91 |
| | Loss Factor | - | 0.0058 | 0.0053 | 0.0302 | 0.0058 | 0.0057 | 0.0057 | 0.0074 | 0.0054 |
| | Bending Strength at 90° 2) | MPa | 127 | 127 | 99 | 104 | 122 | 98 | 108 | 120 |
| | Bending Modulus at 0° 2) | GPa | 121 | 123 | 81 | 98 | 125 | 85 | 100 | 119 |
| | Bending Strength at 0° 2) | MPa | 1546 | 1541 | 978 | 1367 | 1508 | 1391 | 1507 | 1500 |
| | Tg | °C | 104 | 102 | -64,93 | 86 | 114 | -4,112 | -3,114 | 41,115 |

1) Lamination Structure
(I) The constituent element (A) was disposed in each interlayer.
(II) The constituent element (A) was disposed only in the central interlayer.
2) Value at a Vf of 60%

[Table 25]

| | | | Comparative Example | | | |
|---|---|---|---|---|---|---|
| | | | 33 | 34 | 35 | 36 |
| Prepreg | Constituent Element (A) | Raw Material % by Mass | - | - | - | - |
| | Constituent Element (B) | | Reference Example 1 32 | Reference Example 1 32 | Reference Example 1 32 | Reference Example 1 32 |
| | Constituent Element (C) | | C-3 68 | C-4 68 | C-5 68 | C-6 68 |
| | Constituent Element (D) | | - | - | - | - |
| | Surface Containing (A) | - | - | - | - | - |
| | Degree of Surface Localization | % | - | - | - | - |
| Fiber Reinforced Composite Material | Lamination Structure 1) | | - | - | - | - |
| | Degree of Interlayer Localization | % | - | - | - | - |
| | Loss Factor | - | 0.0087 | 0.0106 | 0.0119 | 0.0127 |
| | Bending Strength at 90° 2) | MPa | 126 | 107 | 98 | 94 |
| | Bending Modulus at 0° 2) | GPa | 152 | 187 | 223 | 237 |
| | Bending Strength at 0° 2) | MPa | 1445 | 1305 | 1255 | 1155 |
| | Tg | °C | 113 | 113 | 112 | 114 |

1) Lamination Structure
(I) The constituent element (A) was disposed in each interlayer.
(II) The constituent element (A) was disposed only in the central interlayer.
2) Value at a Vf of 60%

**EP 2 703 432 A1**

[Table 26]

|  |  |  | Example | Comparative Example |
|---|---|---|---|---|
|  |  |  | 38 | 37 |
| Fiber Reinforced Composite Material | Constituent Element (E) | Raw Material % by Mass | A-1 7 | - |
|  | Constituent Element (F) |  | Reference Example 11 30 | Reference Example 11 32 |
|  | Constituent Element (G) |  | C-2 63 | C-2 68 |
|  | Constituent Element (H) |  | - | - |
|  | Lamination Structure 1) |  | (I) | - |
|  | Degree of Interlayer Localization | % | 95 | - |
|  | Loss Factor | - | 0.0075 | 0.0042 |
|  | Bending Strength 2) | MPa | 939 | 958 |
|  | Tg | °C | -9,142 | 141 |
| 1) Lamination Structure<br>(I) The constituent element (E) was disposed in each interlayer.<br>(II) The constituent element (E) was disposed only in the central interlayer.<br>2) Value at a Vf of 60% |  |  |  |  |

Description of the Reference Numeral

1 average thickness of prepreg
2 surface in contact with support plate
3 parallel line corresponding to 20% of prepreg thickness
4 average boundary
5 average centerline in thickness direction
A constituent element (A)
B constituent element (B)
C constituent element (C)
D constituent element (D)
E constituent element (E)
F constituent element (F)
G constituent element (G)
H constituent element (H)
P a constituent element (P)
Q a constituent element (Q)

**Claims**

1. A prepreg comprising constituent elements (A), (B) and (C) below,
said constituent element (A) being arranged on one surface or both surfaces of a layer containing said constituent

67

elements (B) and (C),
not less than 90 area% of said constituent element (A) existing in the region from the surface of said prepreg to a position up to 20% of the average thickness of said prepreg;

(A) epoxy particles having a tan $\delta$ at 10°C of not less than 0.15 and having a three-dimensional cross-linked structure;
(B) a first epoxy resin composition;
(C) reinforcing fibers.

2. The prepreg according to claim 1, wherein said constituent element (A) is not compatible with said constituent element (B).

3. The prepreg according to claim 1 or 2, wherein said constituent element (A) has an average particle diameter of 5 to 20 $\mu$m.

4. The prepreg according to any one of claims 1 to 3, wherein said constituent element (A) is contained in an amount of 2 to 20% by mass in said prepreg.

5. The prepreg according to any one of claims 1 to 4, wherein said constituent element (B) is an epoxy resin composition containing an epoxy resin having an epoxy equivalent of 800 to 5500.

6. The prepreg according to any one of claims 1 to 5, wherein said constituent element (C) is carbon fibers.

7. The prepreg according to claim 6, wherein said constituent element (C) is carbon fibers having a tensile modulus of 230 to 550 GPa.

8. The prepreg according to any one of claims 1 to 7, further comprising a constituent element (D) below,
said constituent element (D) being arranged on one surface or both surfaces of a layer containing said constituent elements (B) and (C),
said constituent element (A) exists in the state where it is contained in said constituent element (D);

(D) a second epoxy resin composition which is not compatible with said constituent element (A).

9. The prepreg according to claim 8, wherein said constituent element (D) is the same as said constituent element (B).

10. The prepreg according to any one of claims 1 to 7, further comprising a constituent element (P) below,
said constituent element (P) being arranged on one surface or both surfaces of a layer containing said constituent elements (B) and (C),
not less than 90 area% of said constituent element (P) existing in the region from the surface of said prepreg to a position up to 20% of the average thickness of said prepreg;

(P) particles having a Young's modulus of not less than 2 GPa and having an average particle diameter of 5 to 100 $\mu$m.

11. The prepreg according to claim 10, further comprising a constituent element (D) below,
said constituent element (D) being arranged on one surface or both surfaces of a layer containing said constituent elements (B) and (C),
said constituent elements (A) and (P) exist in the state where they are contained in said constituent element (D);

(D) a second epoxy resin composition which is not compatible with said constituent element (A).

12. The prepreg according to claim 11, wherein said constituent element (D) is the same as said constituent element (B).

13. A process of producing said prepreg according to any one of claims 1 to 7, said process comprising the steps of:

impregnating said constituent element (C) with said constituent element (B) to obtain a prepreg precursor; and
attaching said constituent element (A) to said prepreg precursor.

**14.** A process of producing said prepreg according to claim 10, said process comprising the steps of:

impregnating said constituent element (C) with said constituent element (B) to obtain a prepreg precursor; and attaching said constituent elements (A) and (P) to said prepreg precursor.

**15.** A process of producing a prepreg according to claim 8 or 9, said process comprising the steps (I), (II) and (III) below;

(I) dispersing said constituent element (A) in said constituent element (D) and making the resulting dispersion into a film;
(II) impregnating said constituent element (C) with said constituent element (B) to obtain a prepreg precursor;
(III) attaching said film obtained in (I) to said prepreg precursor obtained in (II).

**16.** A process of producing a prepreg according to claim 11 or 12, said process comprising the steps (I'), (II') and (III') below;

(I') dispersing said constituent elements (A) and (P) in said constituent element (D) and making the resulting dispersion into a film;
(II') impregnating said constituent element (C) with said constituent element (B) to obtain a prepreg precursor;
(III') attaching said film obtained in (I') to said prepreg precursor obtained in (II').

**17.** A fiber reinforced composite material comprising constituent elements (E), (F) and (G) below,
said fiber reinforced composite material has not less than 2 fiber reinforced layers containing said constituent elements (F) and (G),
not less than 90 area% of said constituent element (E) localizing in the interlayer region between a fiber reinforced layer and another fiber reinforced layer adjacent thereto when the cross section of said fiber reinforced composite material is observed, which interlayer region does not contain said constituent element (G);

(E) epoxy particles having a tan $\delta$ at 10°C of not less than 0.15 and having a three-dimensional cross-linked structure;
(F) a cured material of a third epoxy resin composition;
(G) reinforcing fibers.

**18.** The fiber reinforced composite material according to claim 17, further comprising a constituent element (H), wherein said constituent element (E) exists in the state where it is contained in said constituent element (H).

(H) a cured material of a fourth epoxy resin composition.

**19.** The fiber reinforced composite material according to claim 17 or 18, wherein the loss factor of said fiber reinforced composite material is not less than 130% of the loss factor of a fiber reinforced composite material which is the same as said fiber reinforced composite material except that it does not contain said constituent element (E).

**20.** The fiber reinforced composite material according to any one of claims 17 to 19, wherein the bending strength of said fiber reinforced composite material is not less than 90% of the bending strength of a fiber reinforced composite material which is the same as said fiber reinforced composite material except that it does not contain said constituent element (E).

**21.** The fiber reinforced composite material according to claim 17, further comprising a constituent element (Q) below, wherein not less than 90 area% of said constituent element (Q) localizes in said interlayer region when the cross section of said fiber reinforced composite material is observed;

(Q) particles having a Young's modulus of not less than 2 GPa and having an average particle diameter of 5 to 100 $\mu$m.

**22.** The fiber reinforced composite material according to claim 21, further comprising a constituent element (H) below, wherein said constituent elements (E) and (Q) exist in the state where they are contained in said constituent element (H); (H) a cured material of a fourth epoxy resin composition.

**23.** The fiber reinforced composite material according to claim 21 or 22, wherein the loss factor of said fiber reinforced composite material is not less than 130% of the loss factor of a fiber reinforced composite material which is the same as said fiber reinforced composite material except that it does not contain said constituent elements (E) and (Q).

24. The fiber reinforced composite material according to any one of claims 21 to 23, wherein the bending strength of said fiber reinforced composite material is not less than 90% of the bending strength of a fiber reinforced composite material which is the same as said fiber reinforced composite material except that it does not contain said constituent elements (E) and (Q).

[Fig.1]

[Fig.2]

[Fig.3]

[Fig.4]

[Fig.5]

[Fig.6]

[Fig.7]

[Fig.8]

[Fig.9]

EP 2 703 432 A1

[Fig.10]

76

[Fig.11]

[Fig.12]

## INTERNATIONAL SEARCH REPORT

| International application No. |
|---|
| PCT/JP2012/054372 |

A. CLASSIFICATION OF SUBJECT MATTER
*C08J5/24*(2006.01)i

According to International Patent Classification (IPC) or to both national classification and IPC

B. FIELDS SEARCHED

Minimum documentation searched (classification system followed by classification symbols)
C08J5/24

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y<br>A | JP 63-170428 A (Toray Industries, Inc.),<br>14 July 1988 (14.07.1988),<br>claims; page 2, lower left column, line 19 to<br>lower right column, line 14; page 3, upper left<br>column, line 12 to lower left column, line 11;<br>page 4, lower left column, line 18 to lower<br>right column, line 16; page 5, lower left<br>column, line 5 to lower right column, line 9;<br>page 6, upper left column, line 13 to upper<br>right column, line 13; page 6, lower left<br>column, line 13 to page 7, upper right column,<br>line 2<br>& US 5027478 A          & US 5789073 A<br>& EP 274899 A2 | 1-9,13,15-20<br>10-12,14,<br>21-24 |

☒ Further documents are listed in the continuation of Box C.    ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 08 May, 2012 (08.05.12) | 22 May, 2012 (22.05.12) |

| Name and mailing address of the ISA/<br>Japanese Patent Office | Authorized officer |
|---|---|
| Facsimile No. | Telephone No. |

Form PCT/ISA/210 (second sheet) (July 2009)

**INTERNATIONAL SEARCH REPORT**

| International application No. |
| --- |
| PCT/JP2012/054372 |

C (Continuation).   DOCUMENTS CONSIDERED TO BE RELEVANT

| Category* | Citation of document, with indication, where appropriate, of the relevant passages | Relevant to claim No. |
| --- | --- | --- |
| Y | JP 2004-149979 A  (Toho Tenax Co., Ltd.),<br>27 May 2004 (27.05.2004),<br>paragraph [0039]<br>(Family: none) | 1-9,13,15-20 |
| Y | JP 2006-077202 A  (Toray Industries, Inc.),<br>23 March 2006 (23.03.2006),<br>paragraphs [0040], [0048], [0074]<br>(Family: none) | 5,7 |
| Y | JP 64-026651 A  (Toray Industries, Inc.),<br>27 January 1989 (27.01.1989),<br>page 7, lower left column, line 12 to page 8,<br>upper right column, line 2<br>(Family: none) | 13 |
| A | JP 07-041577 A  (Toray Industries, Inc.),<br>10 February 1995 (10.02.1995),<br>claims; paragraphs [0048] to [0049]<br>(Family: none) | 10-12,14,<br>21-24 |
| P,A | WO 2011/122631 A1  (Toray Industries, Inc.),<br>06 October 2011 (06.10.2011),<br>claims<br>(Family: none) | 1-24 |
| A | JP 01-104624 A  (Toray Industries, Inc.),<br>21 April 1989 (21.04.1989),<br>claims; page 4, upper left column, line 17 to<br>upper right column, line 12<br>& US 5028478 A          & US 5789073 A<br>& EP 2789054 A2 | 1-24 |
| A | JP 2006-052385 A  (Toray Industries, Inc.),<br>23 February 2006 (23.02.2006),<br>claims<br>(Family: none) | 1-24 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009261473 A
- JP 2008237373 A
- JP 2003012889 A
- JP 2010116484 A
- JP S63170428 B
- JP H04207139 B
- JP H01104624 B

**Non-patent literature cited in the description**

- *JISK 5600-9-3*, 2006
- *JIS K5600-9-3*, 2006
- *JIS 7075*, 1991